# EUROPEAN PATENT SPECIFICATION

(11) **EP 4 633 134 B1**
(45) Date of publication and mention of the grant of the patent: **19.08.2026**
(21) Application number: 25167016.2
(22) Date of filing: 28.03.2025
(51) Int. Cl.: H04N 13/305, G02F 1/1335, H04N 13/32, H04N 13/368, H04N 13/371, H04N 13/376, H04N 13/383

(54) **MULTISCOPIC DISPLAY WITH COLLIMATED BACKLIGHT AND CONTROLLABLE LIGHT DIFFUSER**
MULTISKOPISCHE ANZEIGE MIT KOLLIMIERTER RÜCKBELEUCHTUNG UND STEUERBAREM LICHTDIFFUSOR
AFFICHAGE MULTISCOPIQUE AVEC RETROECLAIRAGE COLLIMATE ET DIFFUSEUR DE LUMIERE REGLABLE

(30) Priority: 09.04.2024 US 202418630168; 05.06.2024 US 202418734344; 04.02.2025 US 202519045007
(43) Date of publication of application: 15.10.2025
(73) Proprietor: Distance Technologies Oy, 00530 Helsinki (FI)
(72) Inventor: Konttori, Urho, 00530 Helsinki (FI); Strandborg, Mikko, 00530 Helsinki (FI)
(74) Representative: Moosedog Oy

(56) References cited:
- WO-A1-2021/076424
- US-A1- 2022 264 076

## Description

### TECHNICAL FIELD

The present disclosure relates to multiscopic display systems with collimated backlights and controllable light diffusers. The present disclosure also relates to methods for displaying light field images by employing multiscopic display systems with collimated backlights and controllable light diffusers.

### BACKGROUND

Existing autostereoscopic techniques often rely on multiscopic optical elements, for example, such as lenticular arrays or parallax barriers, to generate stereoscopic images to be presented to eyes of a viewer. Typically, such autostereoscopic techniques involve a multiscopic optical element comprising multiscopic cells that are designed to receive light from two or more photo-emitting cells of a display. By presenting different images to the left eye and the right eye of the viewer, such autostereoscopic techniques allows for achieving a stereoscopic effect.

However, the existing autostereoscopy techniques have significant drawbacks. The lenticular arrays and the parallax barriers both facilitate in achieving a fairly wide viewing zone of the display. A challenge arises when an overall brightness of the display is to be increased by using a collimated or near-collimated light source for a backlight unit of the display. In conventional displays, which require wide viewing angles, the backlight unit must diffuse light over a broad range, often up to a 180-degree field of view. In contrast, multiscopic displays involve emitting light from the backlight unit towards one or more viewers, enabling higher effective brightness with a same energy consumption. This is typically achieved by directing the light into a narrow cone shape, such as a 30-degree angle cone, for example, using reflectors behind the backlight unit. While the aforesaid approach works well when the one or more viewer is positioned within a light cone (namely, a viewing zone), problems arise when the one or more viewer moves outside of the light cone. Even though the multiscopic optical elements, such as lenticular arrays, focus light coming from the backlight unit towards specific areas in front of the display, extreme viewing angles lead to problems. In such cases, each multiscopic optical element collects light rays originating from photo-emitting cells of the display that are offset far to a side of the multiscopic optical element. Because the backlight unit is semicollimated, meaning light rays are predominantly directed in a specific direction, little or no light reaches regions corresponding to the extreme viewing angles, resulting in a loss of the stereoscopic effect or significant image degradation.

US20220264076A1 discloses a display overlaid by a first controllable diffuser operable to diffuse light in a first direction, together with a second controllable diffuser operable to diffuse light in a second direction substantially perpendicular to the first direction. A light beam emitted from a light-emitting device is linearly polarized, and passed through liquid crystal and birefringent materials, with an applied voltage altering the polarization state of the liquid crystal. Depending on the applied state, the beam may then be diffused in either the first direction or the second direction upon transmission through the birefringent material.

WO2021076424A1 discloses a multi-view display incorporating a switchable diffuser. In a first display mode, the diffuser is transparent, operating the multi-view display to display a three-dimensional image, while in a second display mode, the diffuser is translucent, operating the multi-view display to present a two-dimensional image.

Therefore, in light of the foregoing discussion, there exists a need to overcome the aforementioned drawbacks.

### SUMMARY

The present disclosure seeks to provide a display system and a method that facilitate in presenting high-quality, accurate virtual images via a liquid crystal display (LCD) device to eyes of one or more users, in a computationally-efficient and time-efficient manner, even when the eyes of the one or more users lie outside a current viewing zone of the display system. The aim of the present disclosure is achieved by a display system and a method that employ a collimated backlight and controllable light diffuser(s) that facilitate expansion of the current viewing zone by way of horizontal diffusion based on relative locations of the one or more users, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIGs. 1A and 1B illustrate two example implementations of a display system incorporating a collimated backlight and a controllable light diffuser, in accordance with an embodiment of the present disclosure;
FIG. 2A illustrates a side view of an exemplary display system incorporating a collimated backlight and a controllable light diffuser, in accordance with an embodiment of the present disclosure;
FIG. 2B illustrates an example scenario of how a controllable light diffuser of the display system diffuses collimated light rays towards eyes of different users, in accordance with an embodiment of the present disclosure;
FIGs. 2C, 2D, and 2E illustrate different example scenarios of how a controllable light diffuser of the display system concentrates collimated light rays towards eyes of a single user, in accordance with an embodiment of the present disclosure;
FIG. 3 illustrates an example implementation of a backlight unit and a controllable light diffuser, in accordance with an embodiment of the present disclosure; and
FIG. 4 illustrates steps of a method for displaying light field images by employing a display system with a collimated backlight and a controllable light diffuser, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a display system comprising:
a liquid crystal display (LCD) device comprising a backlight unit that is configured to produce collimated light rays;
at least one controllable light diffuser arranged on the optical path of the backlight unit; and
at least one processor configured to:
   obtain information indicative of a relative location of a first eye and of a second eye of an individual one of at least one user with respect to an image plane of the LCD device;
   generate or retrieve a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
   display the light field image via the LCD device for presenting at least one virtual object;
   repeat the step of obtaining, the step of generating or retrieving, and the step of displaying for a given time period;
   during the given time period, detect when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the collimated light rays emitted by the backlight unit are directed upon being diffused by the at least one controllable light diffuser; and
   when it is detected that at least one of: the first eye, the second eye of the individual one of the at least one user lies outside the current viewing zone of the display system,
      determine a given first region of the backlight unit that is being employed to emit a first set of collimated light rays for presenting at least a part of the at least one virtual object to the first eye of the individual one of the at least one user, and a given second region of the backlight unit that is being employed to emit a second set of collimated light rays for presenting at least the part of the at least one virtual object to the second eye of the individual one of the at least one user; and
      selectively activate a corresponding first portion and a corresponding second portion of the at least one controllable light diffuser to horizontally diffuse the first set of collimated light rays and the second set of collimated light rays, whilst directing towards the first eye and the second eye of the individual one of the at least one user, respectively.

In a second aspect, an embodiment of the present disclosure provides a method comprising:
obtaining information indicative of a relative location of a first eye and of a second eye of an individual one of at least one user with respect to an image plane of a liquid crystal display (LCD) device, wherein the LCD device comprises a backlight unit that is configured to produce collimated light rays;
generating or retrieving a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
displaying the light field image via the LCD device for presenting at least one virtual object;
repeating the step of obtaining, the step of generating or retrieving, and the step of displaying for a given time period;
during the given time period, detecting when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the collimated light rays emitted by the backlight unit are directed upon being diffused by at least one controllable light diffuser; and
when it is detected that at least one of: the first eye, the second eye of the individual one of the at least one user lies outside the current viewing zone of the display system,
   determining a given first region of the backlight unit that is being employed to emit a first set of collimated light rays for presenting at least a part of the at least one virtual object to the first eye of the individual one of the at least one user, and a given second region of the backlight unit that is being employed to emit a second set of collimated light rays for presenting at least the part of the at least one virtual object to the second eye of the individual one of the at least one user; and
   selectively activating a corresponding first portion and a corresponding second portion of the at least one controllable light diffuser to horizontally diffuse the first set of collimated light rays and the second set of collimated light rays, whilst directing towards the first eye and the second eye of the individual one of the at least one user, respectively, the at least one controllable light diffuser being arranged on the optical path of the backlight unit.

The present disclosure provides the aforementioned display system and the aforementioned method employing the collimated backlight and the at least one controllable light diffuser, thereby facilitating expansion of the current viewing zone by way of the horizontal diffusion, to present high-quality, accurate virtual images via the LCD device, in a computationally-efficient and time-efficient manner, even when the first eye and/or the second eye of the individual one of the at least one user lie(s) are outside the current viewing zone of the display system. When the at least one of: the first eye, the second eye lies outside the current viewing zone of the display system, it means that during the given time period, a given eye of the individual one of the at least one user is shifted to a non-optimal position relative to the LCD device, namely, outside the region towards which the collimated light rays are typically directed. In such a case, a visual scene being presented to the individual one of the at least one user appears unclear/blurry, and no stereoscopic effect can be perceived by the first eye and/or the second eye. In such a scenario, the at least one controllable light diffuser on the optical path of the backlight unit is employed to horizontally diffuse the collimated light rays in order to dynamically increase/expand the current viewing zone of the display system. Due to such an expansion of the current viewing zone, the given eye that had been shifted to the non-optimal position (during the given time period) would receive sufficient diffused light rays directed towards it, ensuring the visual scene appears clear and highly accurate to the given eye. Thus, the stereoscopic effect can be perceived by the given eye even when it had been shifted to the non-optimal position. Moreover, the display system and the method are robust, fast, and reliable. The display system and the method support real-time presentation of virtual images to eyes of one or more users, by way of horizontally diffusing the collimated light rays, based on relative locations of the eyes.

Pursuant to the embodiments of the present disclosure, the backlight unit is configured to produce the collimated light rays. Throughout the present disclosure, the term *"collimated light rays"* encompasses fully-collimated light rays as well as near-collimated light rays. By *"near-collimated light rays",* it means that an angle formed by such light rays with respect to a predefined direction of collimation is less than a predefined angle. This predefined angle may, for example, lie within a range of 10 degrees to 30 degrees. The predefined direction of collimation could be along an optical axis of the LCD device. It will be appreciated that the predefined direction of collimation is not limited to the optical axis of the LCD device, and could be any other direction. As the predefined direction of collimation is pre-known, the light rays can be easily directed based on the predefined direction of collimation and the given viewing direction.

It will be appreciated that the backlight unit can be configured to produce the collimated light rays in various ways that are well-known in the art. For brevity, some of the various ways will now be described only briefly, without limiting the backlight unit to such implementations only. In a first example implementation, the backlight unit could comprise a plurality of laser light sources and a light guide, wherein the plurality of laser light sources are arranged at one or more edges of the light guide; light rays emitted by the plurality of laser light sources enter the light guide, which then re-directs the light rays to form collimated light rays (namely, a collimated output). In a second example implementation, the backlight unit could comprise a light guide panel (LGP) with integrated microstructures (for example, such as prisms or lenses) and light-emitting diodes (LEDs) arranged at one or more edges of the LGP; light rays emitted by the LEDs enter the LGP, wherein the microstructures redirect the light rays to form collimated light rays (namely, a collimated output). In a third example implementation, the backlight unit could comprise an array of LEDs and an array of collimating lenses arranged on an optical path of the array of LEDs, wherein the collimating lenses are employed to collimate light rays emitted by the LEDs, thereby producing the collimated light rays (namely, a collimated output).

Apart from the backlight unit, optionally, the LCD device optionally further comprises an LCD panel, wherein the LCD panel comprises: a colour filter array; a liquid crystal (LC) layer comprising a plurality of LC cells; at least one linear polarizer arranged on an optical path of the LC layer; and a drive circuit employed to individually control the plurality of LC cells of the LC layer. In some implementations, the at least one linear polarizer comprises a single linear polarizer, and the controllable backlight unit is configured to emit light rays having a polarization orientation that is different from a polarization orientation of the single linear polarizer. Thus, in such implementations, the light rays produced by the controllable backlight unit are typically already polarized. However, in other implementations, the at least one linear polarizer comprises a first linear polarizer and a second linear polarizer, wherein a polarization orientation of the first linear polarizer is different from a polarization orientation of the second linear polarizer. In such implementations, the LC layer of the LC panel is arranged between the first linear polarizer and the second linear polarizer.

Throughout the present disclosure, the term *"controllable light diffuser"* refers to a component that, in operation, diffuses collimated light rays incident thereupon in at least one direction, whilst directing said collimated light rays towards a given eye of the individual one of the at least one user. It will be appreciated that hereinafter collimated light rays upon diffusion may sometimes be referred to as "diffused light rays", for sake of better understanding and clarity. The term *"given eye"* encompasses the first eye and the second eye of the individual one of the at least one user. Optionally, the at least one controllable light diffuser is implemented as an electroactive light diffuser.

The at least one processor controls an overall operation of the display system. The at least one processor is communicably coupled to the LCD device and the at least one controllable light diffuser (specifically, to a drive circuit of the at least one controllable light diffuser). Optionally, the at least one processor is implemented as a processor of the LCD device. Alternatively, optionally, the at least one processor is implemented as a processor of a computing device that is communicably coupled to the LCD device. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

In some implementations, the at least one processor is configured to obtain the information indicative of the relative location of the first eye and of the second eye of the individual one of the at least one user, from tracker, wherein the at least one processor is communicably coupled to the tracker. In some cases, the display system comprises the tracker. The term *"tracker"* refers to a specialised equipment for detecting and/or tracking a location of at least a first eye and a second eye of a given user. Optionally, the tracker is implemented as at least one tracking camera.

The at least one tracking camera may comprise at least one of: at least one visible-light camera, at least one infrared (IR) camera, at least one depth camera. Examples of such a visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of such a depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracker. When different types of images captured by the various different types of tracking cameras are utilised, a location of the given eye of the given user can be determined highly accurately, as results obtained from one type of image can be used to refine results obtained from another type of image. Herein, these different types of images constitute tracking data collected by the tracker, and may be in form of at least one of: visible-light images, IR images, depth images. It will be appreciated that the tracker tracks both eyes of the given user with a significantly high accuracy and precision, such that an error in determining the relative location may, for example, be minimised to within a tolerance range of approximately (+/-) 8 millimetres. In other implementations, the information indicative of the relative location of the first eye and of the second eye of the individual one of the at least one user is pre-known to the at least one processor, for example, in a case when a location of the individual one of the at least one user is fixed.

In some implementations, the light field image is generated by the at least one processor itself, based on the relative location of the first eye and of the second eye of the individual one of the at least one user with respect to the image plane. In other implementations, the light field image is pre-generated and pre-stored at a data repository wherefrom it is retrieved by the at least one processor, the data repository being communicably coupled to the at least one processor. The data repository may be implemented as a memory of the at least one processor, a cloudbased database, or similar.

It will be appreciated that the at least one processor is configured to display the light field image via the LCD device to produce a synthetic light field. The light field image may be understood to be a two-dimensional (2D) image comprising a plurality of pixels, wherein a first set of pixels from amongst the plurality of pixels is responsible for generating a first part of the synthetic light field that corresponds to the first eye, and a second set of pixels from amongst the plurality of pixels is responsible for generating a second part of the synthetic light field that corresponds to the second eye. It will be appreciated that the pixels belonging to the first set are not arranged in a continuous manner across the light field image; similarly, the pixels belonging to the second set are also not arranged in a continuous manner across the light field image. Optionally, the pixels belonging to the first set and the pixels belonging to the second set are arranged in alternating vertical stripes across a horizontal field of view of the light field image, wherein each vertical stripe comprises one or more scanlines of pixels. This is because humans perceive depth mainly based on horizontal binocular parallax. Thus, in this way, the light field image would be considerably different as compared to a conventional 2D image that is displayed via conventional 2D displays, because the same light field image would comprise visual information corresponding to the first eye as well as the second eye of the individual one of the at least one user.

In some implementations, virtual content presented by the synthetic light field corresponds to a virtual environment comprising the at least one virtual object. Optionally, in this regard, the at least one processor is configured to generate the light field image from a perspective of the relative location of the first eye and the second eye of the individual one of the at least one user with respect to the image plane, by employing a three-dimensional (3D) model of the virtual environment. The term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or part thereof, and a virtual information. The term *"three-dimensional model"* of the virtual environment refers to a data structure that comprises comprehensive information pertaining to the at least one virtual object. Such a comprehensive information is indicative of at least one of: a plurality of features of the at least one virtual object or its portions, a shape and a size of the at least one virtual object or its portions, a pose of the at least one virtual object or its portions, a material of the at least one virtual object or its portions, a colour and an optical depth of the at least one virtual object or its portions. The 3D model may be generated in the form of a 3D polygonal mesh, a 3D point cloud, a 3D surface cloud, a voxel-based model, or similar. Optionally, the at least one processor is configured to store the 3D model at the data repository. The term *"synthetic light field"* refers to a light field that is produced (namely, generated) synthetically by the LCD device.

In other implementations, the at least one processor is configured to generate the light field image from a first virtual image and a second virtual image that are to be presented to the first eye and the second eye, respectively. In some cases, the at least one processor is configured to generate the first virtual image and the second virtual image from a perspective of the relative location of the first eye and of the second eye of the individual one of the at least one user with respect to the image plane, by employing a 3D model of the at least one virtual object. It will be appreciated that the relative location of the first eye and of the second eye with respect to the image plane indicate a viewing direction of the first eye and a viewing direction of the second eye, respectively. Therefore, the first virtual image and the second virtual image are generated based on these viewing directions. It will also be appreciated that the first virtual image and the second virtual image are generated in a form of two-dimensional (2D) user interface (UI) elements. The 2D UI elements could pertain to, for example, a virtual navigation tool, a virtual gadget, a virtual message, a virtual entity, a virtual entertainment media, a virtual information, or similar.

Notably, the aforementioned steps of obtaining the information indicative of the relative location, generating or retrieving the light field image, and displaying the light field image, are repeatedly performed by the at least one processor for the given time period.

Since the information indicative of the relative location is repeatedly obtained by the at least one processor and information pertaining to the current viewing zone of the display system is pre-known to the at least one processor, it can be easily and accurately detected when the at least one of: the first eye, the second eye lies outside the current viewing zone of the display system during the given time period. The term *"viewing zone"* of the display system refers to a three-dimensional (3D) zone within which eyes of a given user can be positioned to see a visual scene being presented by the display system. Since said visual scene is presented by the at least one processor itself by way of displaying light field images, the information pertaining to the current viewing zone of the display system can be pre-known to the at least one processor.

When the at least one of: the first eye, the second eye lies within the current viewing zone of the display system, it means that a given eye of the individual one of the at least one user is at an optimal position relative to the LCD device, namely, within a region towards which the collimated light rays are typically directed. In such a case, the visual scene being presented to the individual one of the at least one user is clearly and highly-accurately visible. However, when the at least one of: the first eye, the second eye lies outside the current viewing zone of the display system, it means that during the given time period, the given eye of the individual one of the at least one user is shifted to a non-optimal position relative to the LCD device, namely, outside the region towards which the collimated light rays are typically directed. In such a case, the visual scene being presented to the individual one of the at least one user appears unclear or blurry, and no stereoscopic effect can be perceived by the first eye and/or the second eye. In order to mitigate this potential problem, the at least one controllable light diffuser is employed to diffuse the collimated light rays in order to dynamically increase/expand the current viewing zone of the display system such that the given eye that had been shifted to the non-optimal position (during the given time period) would receive sufficient diffused light rays directed towards it, ensuring the visual scene remains clear and highly accurate to the given eye, as explained hereinbelow in detail.

Since the light field image is displayed by the at least one processor (for presenting the at least one virtual object), which region of the backlight unit is being employed for presenting the at least one virtual object (or its part) to the first eye, and which region of the backlight unit is being employed for presenting the at least one virtual object (or its part) to the second eye, are pre-known to the at least one processor. In other words, locations of those photo-emitting cells of the backlight unit that are being employed to emit the first set of collimated light rays for presenting the at least one virtual object (or its part) to the first eye, and locations of those photo-emitting cells of the backlight unit that are being employed to emit the second set of collimated light rays for presenting the at least one virtual object (or its part) to the second eye, are pre-known to the at least one processor. Locations of such photo-emitting cells constitute the given first region and the given second region. By *"at least a part"* of the at least one virtual object, it means that either a part of the at least one virtual object is presented to the given eye, or an entirety of the at least one virtual object is presented to the given eye.

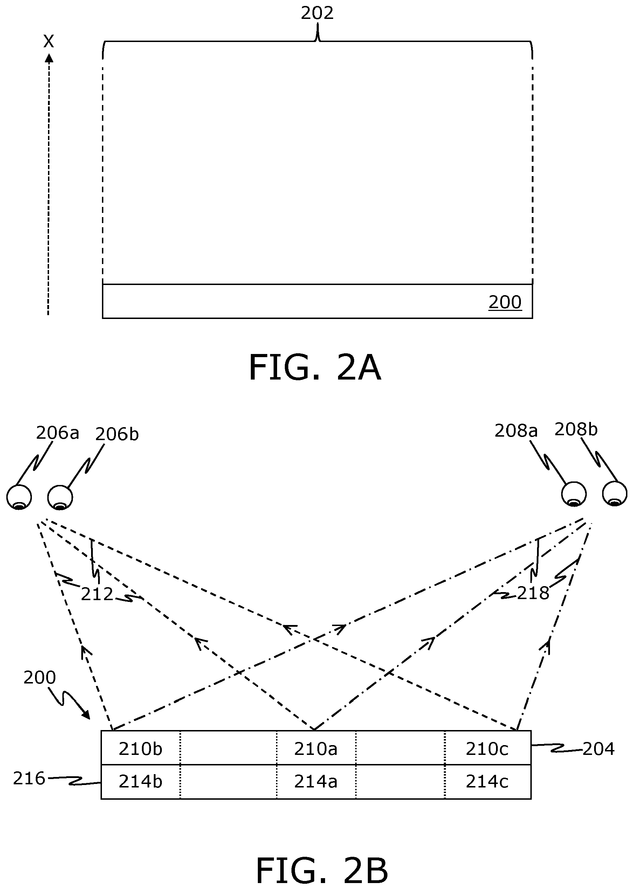

The corresponding first portion of the at least one controllable light diffuser (that corresponds to the given first region of the backlight unit) and the corresponding second portion (that corresponds to the given first region of the backlight unit) of the at least one controllable light diffuser are selectively activated in order to horizontally diffuse the first set of collimated light rays and the second set of collimated light rays, whilst directing towards the first eye and the second eye of the individual one of the at least one user, respectively. Beneficially, due to such horizontal diffusion, the current viewing zone of the display system can be dynamically expanded (along a given axis of the display system) in a manner that the at least one of: the first eye, the second eye, that had been shifted to the non-optimal position (during the given time period) would now receive sufficient light rays directed towards it, even when a collimated light-based backlight unit is employed. This ensures that the visual scene appears clear and highly accurate to the first eye and the second eye of the individual one of the at least one user, and the first eye and the second eye would perceive a stereoscopic effect highly realistically when viewing corresponding virtual images, even when the first eye and the second eye lie outside the current viewing zone of the display system; unlike in the prior art, where a stereoscopic effect is perceived only when the first eye and the second eye are located within a typical, narrow viewing zone of the display system due to the collimated light-based backlight unit, and any deviation from such a typical, narrow viewing zone resulted in a loss of the stereoscopic effect or a degradation of an overall visual quality of images displayed to the first eye and the second eye. This has been also illustrated in conjunction with FIG. 2B, for sake of better understanding and clarity. It will be appreciated that that the current viewing zone can change dynamically because of the at least one controllable light diffuser.

By *"horizontal diffusion",* it means that a given set of collimated light rays are diffused along a horizontal axis of the current viewing zone of the display system. It is noteworthy that arranging the at least one controllable light diffuser on the optical path of the backlight unit facilitates such a horizontal diffusion. Additionally, the first set of collimated light rays and the second set of collimated light rays could also be vertically diffused (namely, along a vertical axis of the current viewing zone of the display system) by the at least one controllable light diffuser, in addition to the horizontal diffusion. Beneficially, this would expand the current viewing zone also along the vertical axis of the display system.

The at least one controllable light diffuser can be beneficially designed to have a high transmittance, thereby allowing for reduction in light wastage. Moreover, it can be beneficially designed to have a wide diffusion angle that lies in a range of 10 degrees to 20 degrees. These technical effects of high transmittance and wide diffusion angle can be achieved by implementing the at least one controllable light diffuser in various possible ways. As an example, the at least one controllable light diffuser can be implemented as a light diffuser having a plurality of micro lenses on a surface of the light diffuser. In such a case, the plurality of micro lenses are shaped depending on the diffusion angle. In this regard, a given micro lens is shaped to bend collimated light rays incident thereupon according to the diffusion angle and a location of the given micro lens in the light diffuser. Notably, an angle of bending varies across said light diffuser, such that the angle of bending is larger for those micro lenses that lie in a proximity of a periphery of said light diffuser, as compared to other those micro lenses that lie in a central portion of said light diffuser.

Optionally, the display system further comprises an active optical element arranged on the optical path of the backlight unit, wherein the at least one processor is configured to control a corresponding first portion and a corresponding second portion of the active optical element, based on the relative location of the first eye and of the second eye of the individual one of the at least one user with respect to the image plane, to direct the first set of collimated light rays and the second set of collimated light rays towards the first eye and the second eye of the individual one of the at least one user, respectively.

The term *"active optical element"* refers to an optical element that is controllable for actively directing (namely, steering) light rays (whether collimated light rays or diffused light rays) incident thereupon towards a given viewing direction (namely, towards a given eye of a given user). A technical benefit of employing the active optical element is that it allows for very precise control and re-direction of the light rays towards the first eye and the second eye of the individual one of the at least one user. This potentially enables in presenting the at least one virtual object in a highly accurate and realistic manner, when displaying the light field image. By dynamically controlling the active optical element, the light rays are directed in a manner that eyes of the individual one of the at least one user would perceive an autostereoscopic effect highly realistically and accurately. This may also allow for producing the autostereoscopic effect even when the eyes of the individual one of the at least one user are located relatively far (for example, more than 1 metre away) from the LCD device.

Optionally, the active optical element is implemented as a liquid-crystal (LC) optical element. The LC optical element enables directing the collimated light rays passing therethrough by adjusting a refractive index of an LC material in the LC optical element. In this regard, the refractive index of the LC material can be controlled electrically. Optionally, the LC optical element is implemented as at least one LC layer. In some implementations, the LC optical element could be implemented as two LC layers. In an example, the LC optical element may be implemented as a switchable LC shutter array. Electrically controlling the LC material to redirect the collimated light rays incident thereupon is well-known in the art. The technical benefit of implementing the LC optical element is that the LC material in the LC optical element could be easily and conveniently controlled (electrically) to direct the collimated light rays very precisely, irrespective of any relative location of the eyes of the individual one of the at least one user.

It will be appreciated that the active optical element can be arranged either after the backlight unit and the at least one controllable light diffuser on the optical path, or between the backlight unit and the at least one controllable light diffuser. This would lead to following possible arrangements of the active optical element in reference to the backlight unit:
(i) backlight unit -> controllable light diffuser -> active optical element, or
(ii) backlight unit -> active optical element -> controllable light diffuser.

It will be appreciated that when the at least one controllable light diffuser is arranged in between the backlight unit and the active optical element, the active optical element would receive diffused light rays thereupon. However, when the active optical element is arranged in between the backlight unit and the at least one controllable light diffuser, the active optical element would receive collimated light rays thereupon. For sake of convenience and better understanding, "->" has been used to only indicate an order of components in a given arrangement.

Optionally, the at least one user is a plurality of users, wherein the at least one processor is configured to:
during the given time period, detect when a given set of collimated light rays emitted by a given region of the backlight unit is being employed to present two-dimensional (2D) virtual content; and
when it is detected that the given set of collimated light rays emitted by the given region of the backlight unit is being employed to present the 2D virtual content,
   selectively activate a corresponding given portion of the at least one controllable light diffuser to horizontally diffuse the given set of collimated light rays, whilst directing towards eyes of each of the plurality of users.

A technical benefit of this is that the 2D virtual content can be presented to the plurality of users in a convenient manner as there would not be any need for displaying different virtual images (representing the at least one virtual object) to a first eye and a second eye of each of the plurality of users (i.e., no stereoscopy is needed when presenting the 2D virtual content to the plurality of users); in other words, a same virtual image could be displayed to the first eye and the second eye of each of the plurality of users. Therefore, by selectively activating the corresponding given portion of the at least one controllable light diffuser, the given set of collimated light rays are horizontally diffused to expand the current viewing zone of the display system such that each of the plurality of users can view the 2D virtual content clearly and accurately from their respective positions, irrespective of whether the first eye and the second eye of each of the plurality of users lie outside or within the current viewing zone of the display system. Optionally, the at least one processor is configured to direct the given set of collimated light rays (upon diffusion) towards the eyes of each of the plurality of users, based on a relative location of the eyes of respective ones of the plurality of users with respect to the image plane of the LCD device. It is to be understood that when the 2D virtual content is presented to the plurality of users simultaneously, the horizontal diffusion to expand the current viewing zone may result in a reduction in a brightness level at which the 2D virtual content is presented to each of the plurality of users; however, such a reduction in the brightness level would be minimal, and the 2D virtual content would still be presented with a sufficient brightness level that can produce a legible virtual image representing the 2D virtual content. It will be appreciated that since the 2D virtual content is to be displayed by the at least one processor itself, it can be easily known when the given set of collimated light rays (emitted by the given region of the backlight unit) is being employed to present the 2D virtual content.

Optionally, the at least one processor is configured to:
during the given time period, detect when the at least one user is a single user, and when eyes of the single user lie within a native viewing zone of the display system, based on respective relative locations of the eyes of the single user with respect to the image plane; and
when it is detected that the at least one user is the single user, and that the eyes of the single user lie within the native viewing zone of the display system,
   selectively activate at least one horizontally-peripheral portion of the at least one controllable light diffuser to horizontally concentrate a set of collimated light rays emitted by at least one corresponding horizontally-peripheral region of the backlight unit, whilst directing towards the eyes of the single user.

In this regard, in some cases, the at least one user is actually a single user. In other cases, the at least one user is considered as the single user when there are multiple users, but only one of the multiple users is currently looking towards the image plane of the LCD device. This is possible, for example, in a scenario where eyes of other remaining users amongst the multiple users are closed temporarily, or the other remaining users are sleeping (for example, in a case where the display system is implemented in a vehicle). For this, the tracking data collected by the tracker can be used to detect when the eyes of the other remaining users are closed. For instance, when the tracking data comprises images of a given eye of a given user, the at least one processor may extract multiple features from the images, such as a pupil, an eyelid curvature, an eyelash position, an eye shape, or a size of the eye. Detection of a closed eye can be based on an absence of the pupil in the images. The at least one processor may employ data processing algorithms such as edge-detection or feature detection to extract these features. Techniques for detecting closed eyes using eye tracking are well-known in the art. Similarly, the at least one processor can determine gaze direction of the given user using the tracker to identify whether the given user is looking at the image plane where virtual images are to be presented. By repeatedly determining the gaze direction, the at least one processor can accordingly ascertain when the given user's gaze aligns with the image plane or when the given user's gaze is directed elsewhere.

The term *"native viewing zone"* refers to a default 3D zone within which the collimated light rays emitted by the backlight unit can be viewed directly, without any additional diffusion (by the at least one controllable light diffuser) or optical modification (by the active optical element). Such a 3D zone is defined by intrinsic properties of the backlight unit, for example, such as an emission profile of the backlight unit, optics of the backlight unit, and an angular distribution of collimated light rays emitted by the backlight unit, and the like. An example of the native viewing zone has been also illustrated in conjunction with FIG. 2A, for sake of better understanding and clarity.

It will be appreciated that since information indicative of the respective relative locations is repeatedly obtained by the at least one processor (during the given time period) and information pertaining to the native viewing zone of the display system is pre-known to the at least one processor, it can be easily and accurately detected when the eyes of the single user lie within the native viewing zone of the display system during the given time period.

A technical benefit of selectively activating the at least one horizontally-peripheral portion of the at least one controllable light diffuser is that collimated light rays of said set can be concentrated towards the single user, which otherwise would have been emitted elsewhere where no other user is present or where eyes of the other user is closed temporarily. Therefore, it is beneficial to concentrate the collimated light rays towards the single user, when the eyes of the single user lie within the native viewing zone of the display system. This ensures that the eyes of the single user would perceive a stereoscopic effect in a highly realistic and accurate manner when viewing corresponding virtual images, and the at least one virtual object would be perceived with exceptionally high brightness and clarity. Optionally, the at least one processor is configured to direct the set of collimated light rays (upon said concentration) towards the eyes of the single user, based on a relative location of the eyes of the single user with respect to the image plane of the LCD device.

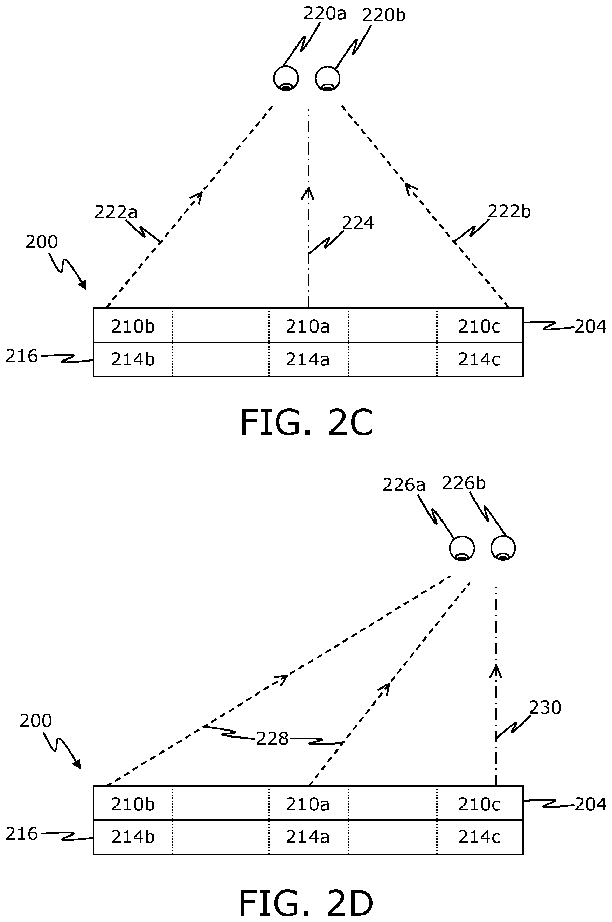

It is noteworthy that in some cases, only one horizontally-peripheral portion of the at least one controllable light diffuser is activated for horizontal concentration. This is applicable in a scenario where the eyes of the single user are located at one corner of the native viewing zone (being within the native viewing zone). As an example, when the eyes of the single user are located at a right corner of the native viewing zone, a left-side horizontally-peripheral portion and a central portion of the at least one controllable light diffuser are activated for horizontal concentration. Moreover, in such an example, a right-side horizontally-peripheral portion of the at least one controllable light diffuser (that corresponds to the right corner of the native viewing zone) is optionally deactivated for horizontal concentration, as discussed below in detail. This has been also illustrated in conjunction with FIG. 2D, for sake of better understanding and clarity. In other cases, two horizontally-peripheral portions of the at least one controllable light diffuser are activated for horizontal concentration. This is applicable in a scenario where the eyes of the single user are located at a central portion of the native viewing zone. As an example, when the eyes of the single user are located at the central portion of the native viewing zone, both a left-side horizontally-peripheral portion and a right-side horizontally-peripheral portion of the at least one controllable light diffuser are activated for horizontal concentration. Moreover, in such an example, a central portion of the at least one controllable light diffuser (that corresponds to the central portion of the native viewing zone) is optionally deactivated for horizontal concentration, as discussed below in detail.

Optionally, the at least one processor is configured to:
when it is detected that the at least one user is the single user, and that the eyes of the single user lie within the native viewing zone of the display system,
detect when the eyes of the single user lie at a central portion of the native viewing zone of the display system; and
when it is detected that the eyes of the single user lie at the central portion of the native viewing zone of the display system,
   selectively deactivate a central portion of the at least one controllable light diffuser to allow a set of collimated light rays emitted by a central region of the backlight unit to pass therethrough towards the eyes of the single user.

In this regard, since the eyes of the single user lie at the central portion of the native viewing zone, the central region of the backlight unit naturally aligns with the eyes of the single user, and thus the set of collimated light rays emitted by the central region of the backlight unit need not require any diffusion or concentration to incident towards the eyes of the single user. Beneficially, in such a case, by selectively deactivating the central portion of the at least one controllable light diffuser, the set of collimated light rays can be conveniently directed towards the eyes of the single user, without any diffusion or may be with minimal diffusion. This potentially facilitates in saving processing resources and processing time of the at least one processor. This has been also illustrated in conjunction with FIG. 2C, for sake of better understanding and clarity.

It will be appreciated that since the information indicative of the respective relative locations is repeatedly obtained by the at least one processor (during the given time period) and the information pertaining to the native viewing zone of the display system is pre-known to the at least one processor, it can be easily and accurately detected that which portion of the native viewing zone the eyes of the single user would lie at.

Optionally, the at least one processor is configured to:
when it is detected that the at least one user is the single user, and that the eyes of the single user lie within the native viewing zone of the display system,
   selectively activate at least one intermediate portion of the at least one controllable light diffuser lying between the at least one horizontally-peripheral portion and a central portion of the at least one controllable light diffuser, to also horizontally concentrate another set of collimated light rays emitted by at least one corresponding intermediate region of the backlight unit, whilst directing towards the eyes of the single user,
wherein when selectively activating the at least one intermediate portion of the at least one controllable light diffuser, the at least one processor is configured to vary an extent of horizontal concentration of subsets of the another set of collimated light rays, based on at least one of: (i) relative locations of respective sub-regions of the at least one corresponding intermediate region of the backlight unit with respect to an optical axis of the backlight unit, (ii) a viewing distance of the eyes of the single user from the LCD device.

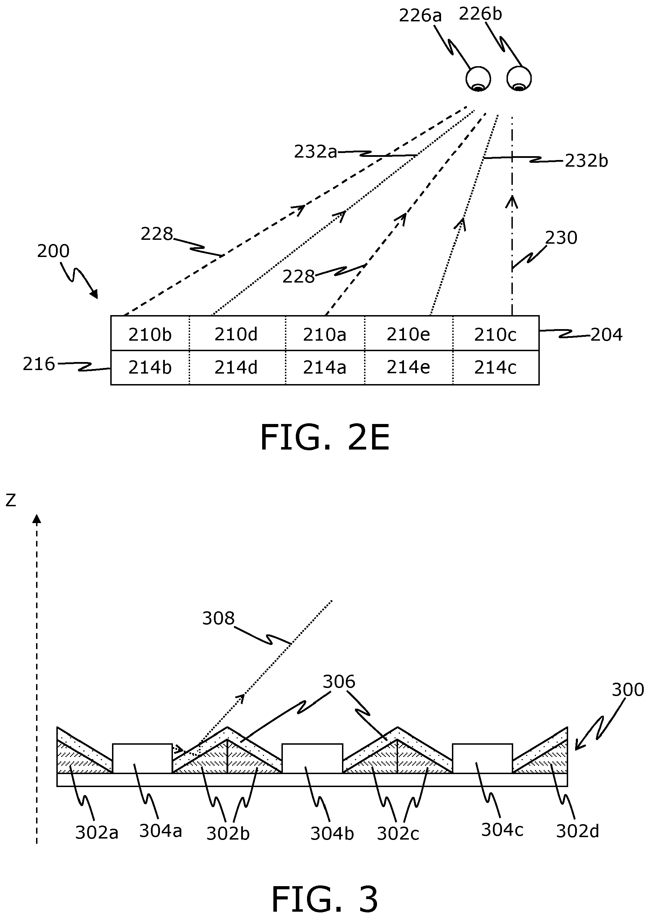

A technical benefit of concentrating the collimated light rays of the another set (by selectively activating the at least one intermediate portion) and directing them towards the eyes of the single user is that the eyes of the single user can be provided with additional light, which otherwise would have been directed elsewhere where no other user is present or where the eyes of the other user is closed temporarily. This ensures that the eyes of the single user would perceive a stereoscopic effect in a highly realistic and accurate manner when viewing corresponding virtual images, and the at least one virtual object would be perceived by the eyes with exceptionally high brightness and clarity. In some implementations, when the eyes of the single user lie at the central portion of the native viewing zone, the at least one intermediate portion and the at least one horizontally-peripheral portion of the at least one controllable light diffuser are preferably activated for horizontal concentration. In other implementations, when the eyes of the single user lie within the native viewing zone but do not lie at the central portion of the native viewing zone, the central portion, the at least one intermediate portion and the at least one horizontally-peripheral portion of the at least one controllable light diffuser are preferably activated for horizontal concentration. This has been also illustrated in conjunction with FIG. 2E, for sake of better understanding and clarity.

Furthermore, in some cases, an extent of horizontal concentration of an entirety of collimated light rays in the another set is not same (i.e., the entirety of collimated light rays in the another set are not horizontally concentrated in a same manner), instead the extent of horizontal concentration of the subsets of the another set of collimated light rays can be varied (i.e., different subsets of the another set can have different extents of horizontal concentration, for example, collimated light rays of a given subset can be more horizontally concentrated as compared to collimated light rays of another given subset). In this regard, farther a sub-region of the at least one corresponding intermediate region of the backlight unit from the optical axis of the backlight unit, greater is the extent of horizontal concentration of a subset of the another set of collimated light rays, said subset being emitted by said sub-region of the at least one corresponding intermediate region of the backlight unit, and vice versa. This is likely because in cases where the eyes of the single user are located in the central region or a near-central region of the native viewing zone, sub-regions farther from the optical axis emit collimated light rays that are not naturally aligned towards the eyes of the single user (namely, towards viewing directions of the eyes of the single user), thereby requiring more horizontal concentration. On the other hand, sub-regions closer to the optical axis have collimated light rays that are relatively aligned towards the eyes of the single user, thereby requiring less horizontal concentration.

However, it is noteworthy that when varying the extent of horizontal concentration based on the relative locations of the respective sub-regions, the at least one processor optionally takes into account a location of the eyes of the single user within the native viewing zone. For example, there could be a case where two sub-regions of two corresponding intermediate regions of the backlight unit are equidistant from the optical axis (for example, located symmetrically on opposite sides of the central region of the backlight unit). In such a case, when the eyes of the single user are located at one corner of the native viewing zone (being within the native viewing zone), the extent of horizontal concentration required by these equidistant sub-regions may differ. This variation arises because a direction and a spread of the collimated light rays from each sub-region is adjusted based on the location of the eyes of the single user in order to ensure that the collimated light rays from each sub-region are accurately/optimally directed towards the eyes of the single user.

Furthermore, lesser the viewing distance of the eyes of the single user from the LCD device, greater is the extent of horizontal concentration of a given subset of the another set of collimated light rays, and vice versa. This is likely because when the single user is relatively closer to the LCD device (namely, when the viewing distance from the LCD device is less), collimated light rays of the given subset are to be traversed with a higher angular deviation to reach the eyes of the single user, thereby requiring a higher horizontal concentration, as compared to a case when the single user is relatively far from the LCD device (namely, when the viewing distance from the LCD device is high). The viewing distance can be measured along an optical path of the LCD device. Information pertaining to the viewing distance can be obtained similarly as the relative locations are obtained.

A technical benefit of a variation of the extent of horizontal concentration is that it allows for fine-grained control over a direction and a spread of the collimated light rays emitted by different sub-regions of the at least one corresponding intermediate region of the backlight unit. As a result, the display system can provide improved visual clarity and uniformity whilst accommodating a wide range of eye positions within the native viewing zone and minimising unnecessary energy consumption by avoiding over-concentration or under-concentration.

Optionally, when selectively activating the corresponding first portion and the corresponding second portion of the at least one controllable light diffuser to horizontally diffuse the first set of collimated light rays and the second set of collimated light rays, the at least one processor is configured to:
vary an extent of horizontal diffusion of subsets of the first set of collimated light rays and subsets of the second set of collimated light rays, based on at least one of: (i) relative locations of respective sub-regions of the given first region of the backlight unit and relative locations of respective sub-regions of the given second region of the backlight unit with respect to an optical axis of the backlight unit, respectively, (ii) a viewing distance of the first eye and of the second eye of the individual one of the at least one user from the LCD device.

In this regard, when the at least one of: the first eye, the second eye of the individual one of the at least one user lies outside the current viewing zone, the extent of horizontal diffusion of the subsets of the first set of collimated light rays and the subsets of the second set of collimated light rays can be varied accordingly. In this regard, depending on a location of the at least one of: the first eye, the second eye, outside the current viewing zone, farther a given sub-region of the given first region and a given sub-region of the given second region from the optical axis of the backlight unit, greater is the extent of horizontal diffusion of a given subset of the first set and a given subset of the second set, and vice versa, wherein collimated light rays of the given subset of the first set are emitted by the given sub-region of the given first region, and collimated light rays of the given subset of the second set are emitted by the given sub-region of the given second region. Hereinafter, "the given sub-region of the given first region and the given sub-region of the given second region" may sometimes be referred to as "sub-regions of the backlight unit", for sake of convenience and better understanding only. In some cases, when the at least one of: the first eye, the second eye lies outside a right corner of the current viewing zone, subsets corresponding to sub-regions of the backlight unit located towards a left corner of the backlight unit may require a greater extent of horizontal diffusion, as compared to subsets corresponding to sub-regions of the backlight unit located towards a right corner of the backlight unit. This is because the at least one of: the first eye, the second eye are significantly far from the left corner of the backlight unit, in comparison to the right corner of the backlight unit. In this way, the extent of horizontal diffusion of subsets gradually decreases while moving in a direction from the left corner of the backlight unit to the right corner of the backlight unit. However, in other cases, when the at least one of: the first eye, the second eye lies outside a left corner of the current viewing zone, subsets corresponding to sub-regions of the backlight unit located towards the right corner of the backlight unit may require a greater extent of horizontal diffusion, as compared to subsets corresponding to sub-regions of the backlight unit located towards the left corner of the backlight unit. This is because the at least one of: the first eye, the second eye are significantly far from the right corner of the backlight unit, in comparison to the left corner of the backlight unit. In this way, the extent of horizontal diffusion of subsets gradually decreases while moving in a direction from the right corner of the backlight unit to the left corner of the backlight unit.

Furthermore, greater the viewing distance of eyes of the individual one of the at least one user from the LCD device, greater is the extent of horizontal diffusion of the given subset of the first set and the given subset of the second set, and vice versa. This is likely because as a distance of a given user from the LCD device increases, an angular extent of the diffused light rays also increases, and vice versa. The viewing distance can be measured along an optical path of the LCD device. Information pertaining to the viewing distance can be obtained similarly as the relative locations are obtained.

A technical benefit of a variation of the extent of horizontal diffusion is that it allows for fine-grained control over a direction and a spread of the collimated light rays emitted by different sub-regions of the backlight unit. As a result, the display system can provide improved visual clarity and uniformity whilst accommodating a wide range of eye positions outside the current viewing zone of the display system, and minimising unnecessary energy consumption by avoiding over-diffusion or underdiffusion. Moreover, even when the eyes of the given user lie outside the current viewing zone of the display system, it can be ensured that the eyes would still perceive a stereoscopic effect in a highly realistic and accurate manner when viewing corresponding virtual images, and the at least one virtual object would be perceived by the eyes with sufficient brightness and clarity.

In an embodiment, the at least one controllable light diffuser comprises a first controllable light diffuser arranged between the backlight unit and a multiscopic optical element. When the display system also optionally comprises the active optical element (as discussed earlier), it would lead to following possible arrangements:
(i) backlight unit -> first controllable light diffuser -> multiscopic optical element -> active optical element,
(ii) backlight unit -> active optical element -> first controllable light diffuser -> multiscopic optical element, or
(iii) backlight unit -> first controllable light diffuser -> active optical element -> multiscopic optical element

The term *"multiscopic optical element"* refers to a specialised optical element that is capable of directing light rays incident thereupon in different directions simultaneously. This allows the multiscopic optical element to present a multiscopic view to the individual one of the at least one user without any need for her/him to wear 3D glasses. Optionally, the multiscopic optical element is implemented as any one of: a parallax barrier, a lenticular array. The multiscopic optical element can be static or actively controllable. The multiscopic optical element and its forms are well-known in the art. A technical benefit of arranging the first controllable light diffuser between the backlight unit and the multiscopic optical element is that the current viewing zone of the display system can be dynamically expanded by diffusing the collimated light rays, whilst retaining a multiscopic effect (necessary for delivering depth perception to multiple users). This ensures that the multiple users can perceive clear and accurate multiscopic visuals without compromising on image quality or depth perception, even as their eye positions change.

In another embodiment, the backlight unit comprises a plurality of reflective elements, wherein the at least one controllable light diffuser comprises a second controllable light diffuser that is implemented as a layer on individual surfaces of the plurality of reflective elements. The term *"reflective element"* refers to a structure having at least one reflective surface. In some implementations, a given reflective element forms a cavity in which a light-emitting element of the backlight unit is placed. In other words, the given reflective element has at least one reflective surface that surrounds a respective light-emitting element along a plane that is perpendicular to the optical axis of the backlight unit. The at least one reflective surface is aligned at an angle with respect to the optical axis of the backlight unit. Said angle could, for example, lie in a range of 25 degrees to 65 degrees; more optionally, in a range of 30 degrees to 60 degrees. As a result of such an alignment of the at least one reflective surface, a part of light emanating from the respective light-emitting element that is incident upon the at least one reflective surface is reflected towards the second controllable light diffuser that is implemented as a layer on an individual surface of the given reflective element. It will be appreciated that said part of light could reflect multiple times before it exits the given reflective element. In other implementations, a given reflective element is in form of a focussing mirror. Moreover, the at least one reflective surface can be made with a high quality factor, such that the light reflects with minimal attenuation. In some implementations, the at least one reflective surface comprises a single, continuous reflective surface. One example of such a reflective surface is a truncated-cone-shaped reflective surface. In other implementations, the at least one reflective surface comprises a plurality of reflective surfaces that are arranged one after another to form a partial enclosure. Said partial enclosure can be in a form of a truncated-cone-like cavity.

A technical benefit of having the plurality of reflective elements is that it facilitates in generating collimated light rays. Moreover, implementing the second controllable light diffuser as a layer on the individual surfaces of the plurality of reflective elements allows precise, localised control over the horizonal diffusion of collimated light rays. This enhances flexibility and efficiency of optical manipulation, enabling dynamic adjustments to the current viewing zone while minimising additional hardware complexity and preserving compactness of the display system.

Optionally, the at least one controllable light diffuser further comprises a third controllable light diffuser arranged on the optical path of the backlight unit, after a multiscopic optical element. In this regard, the third controllable light diffuser can be also arranged on the optical path, in addition of any one of: the first controllable light diffuser, the second controllable light diffuser. A technical benefit of arranging the third controllable light diffuser on the optical path, after the multiscopic optical element, is that it enables selective control over an activation or deactivation of the multiscopic effect within specific regions of the display system. When the third controllable light diffuser is activated, the multiscopic effect in a corresponding region of the display system is suppressed, effectively transforming that said corresponding region into a plain 2D display. This allows the display system to dynamically switch between multiscopic and non-multiscopic (2D) modes, enabling flexibility to accommodate different viewing scenarios, such as providing standard 2D content to a given user without any need for depth perception.

Additionally, when the third controllable light diffuser is paired with the first controllable light diffuser arranged between the backlight unit and the multiscopic optical element, the display system gains capability for precise control over a width of an emission lobe, i.e., the first controllable light diffuser can expand the current viewing zone while preserving the multiscopic effect ensuring that the display system caters to multiple users present at wider viewing angles (as mentioned earlier).

When the display system optionally comprises the active optical element, the first controllable light diffuser, and the third controllable light diffuser, it would lead to following possible arrangements:
(i) backlight unit -> first controllable light diffuser -> multiscopic optical element -> third controllable light diffuser -> active optical element,
(ii) backlight unit -> active optical element -> first controllable light diffuser -> multiscopic optical element -> third controllable light diffuser, or
(iii) backlight unit -> first controllable light diffuser -> active optical element -> multiscopic optical element -> third controllable light diffuser.

Similarly, when the display system optionally comprises the active optical element, the second controllable light diffuser, and the third controllable light diffuser, it would lead to following possible arrangements:
(i) backlight unit -> second controllable light diffuser -> multiscopic optical element -> third controllable light diffuser -> active optical element,
(ii) backlight unit -> active optical element -> second controllable light diffuser -> multiscopic optical element -> third controllable light diffuser, or
(iii) backlight unit -> second controllable light diffuser -> active optical element -> multiscopic optical element -> third controllable light diffuser.

Optionally, the display system further comprises the multiscopic optical element. It will be appreciated that an alternative to a conventional multiscopic optical element, the display system may comprise a specialised backlight unit comprising a first layer of lenticulars, a diffuser layer, and a second layer of lenticulars. The first layer of lenticulars focuses light emitted by an addressable light-emitting diode (LED) matrix, concentrating the light into near-singular light points on a subsequent diffuser layer. The diffuser layer is arranged to receive the focussed light from the first layer of lenticulars, and serves as an emission surface for light points. The second layer of lenticulars directs the light emitted by the diffuser layer toward specific directions. A steering of the light's direction is achieved by selectively activating specific LEDs within the addressable LED matrix. By leveraging such a configuration, the specialised backlight unit produces steerable collimated light, which is then passed through a traditional LCD panel. The LCD panel is capable of generating a full-resolution colour image, while stereoscopy or multiscopy is realised via temporal multiplexing. The temporal multiplexing allows alternating image frames to be directed toward different eyes (for example, one image frame towards a left eye and a next image frame towards a right eye), thus enabling depth perception without relying on the conventional multiscopic optical elements. Such a specialised backlight unit is described, for example, in *"*Modeling and optimizing through plenoptic function for the dual lenticular lens-based directional autostereoscopic display system" by Xueling Li, Shengzhi Qiang, Yuanqing Wang, and Xicai Li, published in Optics Express, Vol. 32, Issue 7, pp. 10925-10940, 2024, which has been incorporated herein by reference.

Optionally, when the display system comprises the multiscopic optical element that is actively controllable, and when it is detected that the given set of collimated light rays emitted by the given region of the backlight unit is being employed to present the 2D virtual content (as discussed earlier), the at least one processor is configured to deactivate a corresponding portion of the multiscopic optical element. Optionally, when the display system comprises the multiscopic optical element, the at least one processor is configured to determine the given first region of the backlight unit and the given second region of the backlight unit, based on relative locations of individual multiscopic cells of the multiscopic optical element with respect to regions of the backlight unit. It will be appreciated that a given multiscopic cell can be a lenticule (in a case when the multiscopic optical element is implemented as a lenticular array) or be a transparent portion (in a case when the multiscopic optical element is implemented as a parallax barrier). Optionally, when the display system further comprises the multiscopic optical element and the active optical element, the at least one processor is configured to control the corresponding first portion and the corresponding second portion of the active optical element, based further on the relative locations of the individual multiscopic cells of the multiscopic optical element.

The present disclosure also relates to the method as described above. Various embodiments and variants disclosed above, with respect to the aforementioned first aspect, apply *mutatis mutandis* to the method.

Optionally, the method further comprises controlling a corresponding first portion and a corresponding second portion of an active optical element, based on the relative location of the first eye and of the second eye of the individual one of the at least one user with respect to the image plane, to direct the first set of collimated light rays and the second set of collimated light rays towards the first eye and the second eye of the individual one of the at least one user, respectively, the active optical element being arranged on the optical path of the backlight unit.

Optionally, the at least one user is a plurality of users, wherein the method further comprises:
during the given time period, detecting when a given set of collimated light rays emitted by a given region of the backlight unit is being employed to present two-dimensional (2D) virtual content; and
when it is detected that the given set of collimated light rays emitted by the given region of the backlight unit is being employed to present the 2D virtual content,
   selectively activating a corresponding given portion of the at least one controllable light diffuser to horizontally diffuse the given set of collimated light rays, whilst directing towards eyes of each of the plurality of users.

Optionally, the method further comprises:
during the given time period, detecting when the at least one user is a single user, and when eyes of the single user lie within a native viewing zone of the display system, based on respective relative locations of the eyes of the single user with respect to the image plane; and
when it is detected that the at least one user is the single user, and that the eyes of the single user lie within the native viewing zone of the display system,
   selectively activating at least one horizontally-peripheral portion of the at least one controllable light diffuser to horizontally concentrate a set of collimated light rays emitted by at least one corresponding horizontally-peripheral region of the backlight unit, whilst directing towards the eyes of the single user.

Optionally, the method further comprises:
when it is detected that the at least one user is the single user, and that the eyes of the single user lie within the native viewing zone of the display system,
detecting when the eyes of the single user lie at a central portion of the native viewing zone of the display system; and
when it is detected that the eyes of the single user lie at the central portion of the native viewing zone of the display system,
   selectively deactivating a central portion of the at least one controllable light diffuser to allow a set of collimated light rays emitted by a central region of the backlight unit to pass therethrough towards the eyes of the single user.

Optionally, the method further comprises:
when it is detected that the at least one user is the single user, and that the eyes of the single user lie within the native viewing zone of the display system,
   selectively activating at least one intermediate portion of the at least one controllable light diffuser lying between the at least one horizontally-peripheral portion and a central portion of the at least one controllable light diffuser, to also horizontally concentrate another set of collimated light rays emitted by at least one corresponding intermediate region of the backlight unit, whilst directing towards the eyes of the single user,
wherein the step of selectively activating the at least one intermediate portion of the at least one controllable light diffuser comprises varying an extent of horizontal concentration of subsets of the another set of collimated light rays, based on at least one of: (i) relative locations of respective sub-regions of the at least one corresponding intermediate region of the backlight unit with respect to an optical axis of the backlight unit, (ii) a viewing distance of the eyes of the single user from the LCD device.

Optionally, in the method, the step of selectively activating the corresponding first portion and the corresponding second portion of the at least one controllable light diffuser to horizontally diffuse the first set of collimated light rays and the second set of collimated light rays comprises:
varying an extent of horizontal diffusion of subsets of the first set of collimated light rays and subsets of the second set of collimated light rays, based on at least one of: (i) relative locations of respective sub-regions of the given first region of the backlight unit and relative locations of respective sub-regions of the given second region of the backlight unit with respect to an optical axis of the backlight unit, respectively, (ii) a viewing distance of the first eye and of the second eye of the individual one of the at least one user from the LCD device.

Optionally, in the method, the at least one controllable light diffuser comprises a first controllable light diffuser arranged between the backlight unit and a multiscopic optical element.

Alternatively, optionally, in the method, the backlight unit comprises a plurality of reflective elements, wherein the at least one controllable light diffuser comprises a second controllable light diffuser that is implemented as a layer on individual surfaces of the plurality of reflective elements.

Optionally, in the method, the at least one controllable light diffuser further comprises a third controllable light diffuser arranged on the optical path of the backlight unit, after a multiscopic optical element.

### DETAILED DESCRIPTION OF THE DRAWINGS

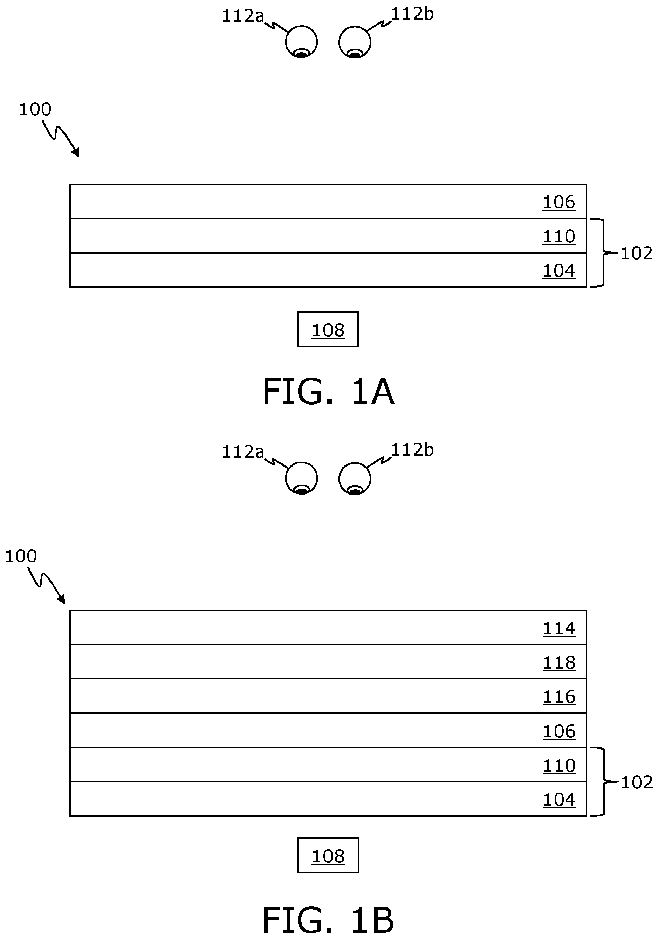

Referring to FIGs. 1A and 1B, illustrated are two example implementations of a display system **100** incorporating a collimated backlight and a controllable light diffuser, in accordance with an embodiment of the present disclosure. With reference to FIGs. 1A and 1B, the display system **100** comprises a liquid crystal display (LCD) device **102** comprising a backlight unit **104** that is configured to produce collimated light rays, at least one controllable light diffuser (depicted as a controllable light diffuser **106**) arranged on the optical path of the backlight unit **104,** and at least one processor (depicted as a processor **108**). Optionally, the LCD device **102** further comprises an LC panel **110,** wherein the LC panel **110** comprises: (i) a colour filter array; (ii) a liquid crystal (LC) layer comprising a plurality of LC cells; (iii) at least one linear polarizer arranged on an optical path of the LC layer; and (iv) a drive circuit employed to individually control the plurality of LC cells of the LC layer. Components of the LC panel **110** are not shown in FIGs. 1A and 1B for sake of brevity. The processor **108** is communicably coupled to the LCD device **102** and the controllable light diffuser **106.** The processor is **108** configured to:
obtain information indicative of a relative location of a first eye **112a** and of a second eye **112b** of an individual one of at least one user with respect to an image plane of the LCD device **102;**
generate or retrieve a light field image, based on the relative location of the first eye **112a** and of the second eye **112b** of the individual one of the at least one user with respect to the image plane;
display the light field image via the LCD device **102** for presenting at least one virtual object;
repeat the step of obtaining, the step of generating or retrieving, and the step of displaying for a given time period;
during the given time period, detect when at least one of: the first eye **112a,** the second eye **112b** of the individual one of the at least one user lies outside a current viewing zone of the display system **100,** based on the relative location of the first eye **112a** and of the second eye **112b** of the individual one of the at least one user with respect to the image plane; and
when it is detected that at least one of: the first eye **112a,** the second eye **112a** of the individual one of the at least one user lies outside the current viewing zone of the display system **100,**
   determine a given first region of the backlight unit **104** that is being employed to emit a first set of collimated light rays for presenting at least a part of the at least one virtual object to the first eye **112a** of the individual one of the at least one user, and a given second region of the backlight unit **104** that is being employed to emit a second set of collimated light rays for presenting at least the part of the at least one virtual object to the second eye **112b** of the individual one of the at least one user; and
   selectively activate a corresponding first portion and a corresponding second portion of the controllable light diffuser **106** to horizontally diffuse the first set of collimated light rays and the second set of collimated light rays, whilst directing towards the first eye **112a** and the second eye **112b** of the individual one of the at least one user, respectively.

With reference to FIG. 1B, optionally, the display system **100** further comprises an active optical element **114** arranged on an optical path of the backlight unit **104,** wherein the processor **108** is configured to control a corresponding first portion and a corresponding second portion of the active optical element **114,** based on the relative location of the first eye **112a** and of the second eye **112b** of the individual one of the at least one user with respect to the image plane, to direct the first set of collimated light rays and the second set of collimated light rays towards the first eye **112a** and the second eye **112b** of the individual one of the at least one user, respectively. Optionally, the display system **100** further comprises a multiscopic optical element **116.** In this regard, the controllable light diffuser **106** is shown to be arranged between the LCD device **102** (specifically, the backlight unit **104** and additionally, optionally, the LC panel **110**) and the multiscopic optical element **116.** Optionally, the display system **100** further comprises another controllable light diffuser **118,** wherein the another controllable light diffuser **118** is arranged on the optical path of the backlight unit **104,** after the multiscopic optical element **116.** The controllable light diffuser **106** may also be referred to as a first controllable light diffuser, while the another controllable light diffuser **118** may also be referred to as a third controllable light diffuser.

It may be understood by a person skilled in the art that FIGs. 1A and 1B merely depict two example implementations (out of many possible implementations) of the display system **100,** for sake of clarity, which should not unduly limit the scope of the claims herein. It is to be understood that the specific implementation of the system **100** is not to be construed as limiting it to specific numbers or types of backlight units, processors, controllable light diffusers, active optical elements, and multiscopic optical elements. The person skilled in the art will recognize many variations, alternatives, and modifications of embodiments of the present disclosure. As an example, the active optical element **114** can be arranged anywhere on the optical path of the backlight unit **104.** As another example, the LC panel **110** can be arranged between the backlight unit **104** and the multiscopic optical element **116,** after the controllable light diffuser **106.**

Referring to FIG. 2A, illustrated is a side view of an exemplary display system **202** incorporating a collimated backlight and a controllable light diffuser, in accordance with an embodiment of the present disclosure. The side view shows an extent of a native viewing zone **202** of the display system **200** along an optical axis **X** of the display system **200.** Side views of some components of the display system **200** are shown in subsequent FIGs. 2B, 2C, 2D, and 2E. Roles of these components will be discussed along with descriptions of FIGs. 2B-2E. There will now be discussed FIGs. 2B-2E.

Referring to FIG. 2B, illustrated is an example scenario of how a controllable light diffuser **204** of the display system **200** diffuses collimated light rays towards eyes of different users, in accordance with an embodiment of the present disclosure. A first eye **206a** and a second eye **206b** of a first user are shown to lie outside the native viewing zone **202** (as shown in FIG. 2A) of the display system **200.** Similarly, a first eye **208a** and a second eye **208b** of a second user are also shown to lie outside the native viewing zone **202.**

For the first user, a central portion **210a** and two horizontally-peripheral portions **210b** and **210c** of the controllable light diffuser **204** are controlled to horizontally diffuse collimated light rays **212** (depicted using dashed lines with arrows) emitted by a central region **214a** and two corresponding horizontally-peripheral regions **214b** and **214c** of a backlight unit **216** of the display system **200,** whilst directing the collimated light rays **212** towards the eyes **206a-b** of the first user. For sake of simplicity and convenience only, three collimated light rays are shown to be diffused and directed towards a given user. Typically, hundreds to thousands of collimated light rays are diffused and directed towards the given user.

For the second user, the central portion **210a** and the two horizontally-peripheral portions **210b-c** of the controllable light diffuser **204** are controlled to horizontally diffuse collimated light rays **218** (depicted using dash-dot lines with arrows) emitted by the central region **214a** and the two corresponding horizontally-peripheral regions **214b-c** of the backlight unit **216,** whilst directing the collimated light rays **218** towards the eyes **206a-b** of the second user.

Referring to FIGs. 2C, 2D, and 2E, illustrated are different example scenarios of how a controllable light diffuser of the display system **200** concentrates collimated light rays towards eyes of a single user, in accordance with an embodiment of the present disclosure.

With reference to FIG. 2C, a first eye **220a** and a second eye **220b** of a single user are shown to lie at a central portion within the native viewing zone **202** (as shown in FIG. 2A) of the display system **200.** For the single user, two horizontally-peripheral portions **210b-c** of the controllable light diffuser **204** are controlled to horizontally concentrate collimated light rays **222a** and **222b** (depicted using dashed lines with arrows) emitted by two corresponding horizontally-peripheral regions **214b-c** of the backlight unit **216,** whilst directing the collimated light rays **222a-b** towards eyes **220a-b** of the single user. Simultaneously, a central portion **210a** of the controllable light diffuser **204** is deactivated to allow collimated light rays **224** (depicted using a dash-dot line with arrows) emitted by a central region **214a** of the backlight unit **216** to pass therethrough towards the eyes **220a-b** of the single user (i.e., without any diffusion or with minimal diffusion).

With reference to FIGs. 2D and 2E, a first eye **226a** and a second eye **226b** of a single user are shown to lie at a right-side portion within the native viewing zone **202** (as shown in FIG. 2A) of the display system **200.** For the single user, a central portion **210a** and a horizontally-peripheral portion **210b** of the controllable light diffuser **204** are controlled to horizontally concentrate collimated light rays **228** (depicted using dashed lines with arrows) emitted by a central region **214a** and a corresponding horizontally-peripheral region **214b** of the backlight unit **216,** whilst directing the collimated light rays **228** towards eyes **226a-b** of the single user. Simultaneously, another horizontally-peripheral portion **210c** of the controllable light diffuser **204** is deactivated to allow collimated light rays **230** (depicted using a dash-dot line with arrows) emitted by another corresponding horizontally-peripheral region **214c** of the backlight unit **216** to pass therethrough towards the eyes **226a-b** of the single user (i.e., without any diffusion or with minimal diffusion).

With reference to FIG. 2E, for the single user, two intermediate portions **210d** and **210e** of the controllable light diffuser **204** are controlled to also horizontally concentrate collimated light rays **232a** and **232b** (depicted using dotted lines with arrows) emitted by two corresponding intermediate regions **214d** and **214e** of the backlight unit **216,** whilst directing the collimated light rays **232a-b** towards the eyes **226a-b** of the single user. The intermediate portion **210d** lies between the horizontally-peripheral portion **210b** and the central portion **210a** of the controllable light diffuser **204.** The intermediate portion **210e** lies between the horizontally-peripheral portion **210c** and the central portion **210a** of the controllable light diffuser **204.**

Referring to FIG. 3, illustrated is an example implementation of a backlight unit **300** and a controllable light diffuser **306,** in accordance with an embodiment of the present disclosure. The backlight unit **300** comprises a plurality of reflective elements (depicted as reflective elements **302a, 302b, 302c,** and **302d,** using a backslash pattern), and a plurality of light-emitting elements (depicted as light-emitting elements **304a, 304b,** and **304c).** Herein, the controllable light diffuser **306** (depicted using a dotted pattern) is implemented as a layer on individual surfaces of the reflective elements **302a, 302b, 302c,** and **302d. 'Z'** represents an optical axis of the backlight unit **300.** The controllable light diffuser **306** may also be referred to as a second controllable light diffuser. The plurality of light-emitting elements **304a-c,** in operation, emit light rays (depicted as a single light ray **308** emitted by the light-emitting element **304a,** using a dotted line with arrows, for sake of simplicity and clarity), and the plurality of reflective elements **206a-d,** in operation, reflect light rays (such as the single light ray **308**) along the optical axis **Z** of the backlight unit **300.** The single light ray **308** can be a collimated light ray.

FIGs. 2A-2E and FIG. 3 are merely examples, which should not unduly limit the scope of the claims herein. A person skilled in the art will recognize many variations, alternatives, and modifications of embodiments of the present disclosure.

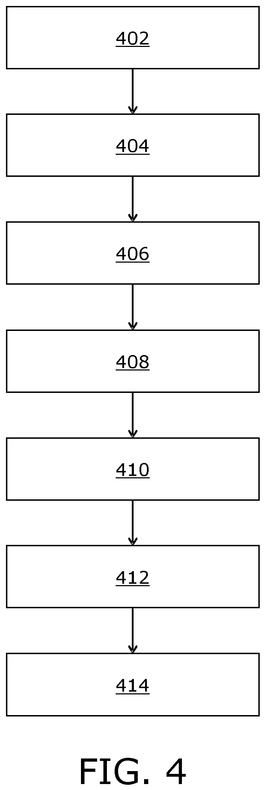

Referring to FIG. 4, illustrated are steps of a method for displaying light field images by employing a display system with a collimated backlight and a controllable light diffuser, in accordance with an embodiment of the present disclosure. At step **402,** information indicative of a relative location of a first eye and of a second eye of an individual one of at least one user with respect to an image plane of a liquid crystal display (LCD) device, is obtained, wherein the LCD device comprises a backlight unit that is configured to produce collimated light rays. At step **404,** a light field image is generated or retrieved, based on the relative location of the first eye and of the second eye of the individual one of the at least one user with respect to the image plane. At step **406,** the light field image is displayed via the LCD device for presenting at least one virtual object. At step **408,** the step of obtaining, the step of generating or retrieving, and the step of displaying are repeated for a given time period. During the given time period, at step **410,** it is detected when at least one of: the first eye, the second eye of the individual one of the at least one user lies outside a current viewing zone of the display system, based on the relative location of the first eye and of the second eye of the individual one of the at least one user with respect to the image plane. When it is detected that at least one of: the first eye, the second eye of the individual one of the at least one user lies outside the current viewing zone of the display system, at step **412,** a given first region and a given second region of the backlight unit are determined, the given first region being employed to emit a first set of collimated light rays for presenting at least a part of the at least one virtual object to the first eye of the individual one of the at least one user, and the given second region being employed to emit a second set of collimated light rays for presenting at least the part of the at least one virtual object to the second eye of the individual one of the at least one user. At step **414,** a corresponding first portion and a corresponding second portion of at least one controllable light diffuser are selectively activated to horizontally diffuse the first set of collimated light rays and the second set of collimated light rays, whilst directing towards the first eye and the second eye of the individual one of the at least one user, respectively, the at least one controllable light diffuser being arranged on the optical path of the backlight unit.

The aforementioned steps are only illustrative and other alternatives can also be provided where one or more steps are added, one or more steps are removed, or one or more steps are provided in a different sequence without departing from the scope of the claims herein.

## Claims

1. A display system (100, 202) comprising:
a liquid crystal display (LCD) device (102) comprising a backlight unit (104, 216, 300) that is configured to produce collimated light rays (212, 218, 222a-b, 224, 228, 230, 232a-b);
at least one controllable light diffuser (106, 204, 306) arranged on the optical path of the backlight unit; and
at least one processor (108) configured to:
obtain information indicative of a relative location of a first eye (112a, 206a, 208a, 220a, 226a) and of a second eye (112b, 206b, 208b, 220b, 226b) of an individual one of at least one user with respect to an image plane of the LCD device;
generate or retrieve a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
display the light field image via the LCD device for presenting at least one virtual object;
repeat the step of obtaining, the step of generating or retrieving, and the step of displaying for a given time period;
during the given time period, detect when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the collimated light rays emitted by the backlight unit are directed upon being diffused by the at least one controllable light diffuser; and
when it is detected that at least one of: the first eye, the second eye of the individual one of the at least one user lies outside the current viewing zone of the display system,
determine a given first region of the backlight unit that is being employed to emit a first set of collimated light rays for presenting at least a part of the at least one virtual object to the first eye of the individual one of the at least one user, and a given second region of the backlight unit that is being employed to emit a second set of collimated light rays for presenting at least the part of the at least one virtual object to the second eye of the individual one of the at least one user; and
selectively activate a corresponding first portion and a corresponding second portion of the at least one controllable light diffuser to horizontally diffuse the first set of collimated light rays and the second set of collimated light rays, whilst directing towards the first eye and the second eye of the individual one of the at least one user, respectively.

2. The display system (100, 202) of claim 1, further comprising an active optical element (114) arranged on the optical path of the backlight unit (104, 216, 300), wherein the at least one processor (108) is configured to control a corresponding first portion and a corresponding second portion of the active optical element, based on the relative location of the first eye (112a, 206a, 208a, 220a, 226a) and of the second eye (112b, 206b, 208b, 220b, 226b) of the individual one of the at least one user with respect to the image plane, to direct the first set of collimated light rays and the second set of collimated light rays towards the first eye and the second eye of the individual one of the at least one user, respectively.

3. The display system (100, 202) of any of the preceding claims, wherein the at least one user is a plurality of users, wherein the at least one processor (108) is configured to:
during the given time period, detect when a given set of collimated light rays emitted by a given region of the backlight unit (104, 216, 300) is being employed to present two-dimensional (2D) virtual content; and
when it is detected that the given set of collimated light rays emitted by the given region of the backlight unit is being employed to present the 2D virtual content,
selectively activate a corresponding given portion of the at least one controllable light diffuser (106, 204, 306) to horizontally diffuse the given set of collimated light rays, whilst directing towards eyes (112a-b, 206a-b, 208a-b, 220a-b, 226a-b) of each of the plurality of users.

4. The display system (100, 202) of any of the preceding claims, wherein the at least one processor (108) is configured to:
during the given time period, detect when the at least one user is a single user, and when eyes (220a-b) of the single user lie within a native viewing zone (202) of the display system, based on respective relative locations of the eyes of the single user with respect to the image plane, the native viewing zone being a zone within which the collimated light rays emitted by the backlight unit can be viewed directly, without being diffused by the at least one controllable light diffuser; and
when it is detected that the at least one user is the single user, and that the eyes of the single user lie within the native viewing zone of the display system,
selectively activate at least one horizontally-peripheral portion (210b-c) of the at least one controllable light diffuser (106, 204, 306) to horizontally concentrate a set of collimated light rays (212, 218) emitted by at least one corresponding horizontally-peripheral region (214b-c) of the backlight unit (104, 216, 300), whilst directing towards the eyes of the single user.

5. The display system (100, 202) of claim 4, wherein the at least one processor (108) is configured to:
when it is detected that the at least one user is the single user, and that the eyes (220a-b) of the single user lie within the native viewing zone (202) of the display system,
detect when the eyes of the single user lie at a central portion of the native viewing zone of the display system; and
when it is detected that the eyes of the single user lie at the central portion of the native viewing zone of the display system,
selectively deactivate a central portion (210a) of the at least one controllable light diffuser (106, 204, 306) to allow a set of collimated light rays (224) emitted by a central region (214a) of the backlight unit (104, 216, 300) to pass therethrough towards the eyes of the single user.

6. The display system (100, 202) of claim 4 or 5, wherein the at least one processor (108) is configured to:
when it is detected that the at least one user is the single user, and that the eyes (226a-b) of the single user lie within the native viewing zone (202) of the display system,
selectively activate at least one intermediate portion (210d-e) of the at least one controllable light diffuser (106, 204, 306) lying between the at least one horizontally-peripheral portion (210b-c) and a central portion (210a) of the at least one controllable light diffuser, to also horizontally concentrate another set of collimated light rays (232a-b) emitted by at least one corresponding intermediate region (214d-e) of the backlight unit (104, 216, 300), whilst directing towards the eyes of the single user,
wherein when selectively activating the at least one intermediate portion of the at least one controllable light diffuser, the at least one processor is configured to vary an extent of horizontal concentration of subsets of the another set of collimated light rays, based on at least one of: (i) relative locations of respective sub-regions of the at least one corresponding intermediate region of the backlight unit with respect to an optical axis (Z) of the backlight unit, (ii) a viewing distance of the eyes of the single user from the LCD device (102).

7. The display system (100, 202) of any of the preceding claims, wherein when selectively activating the corresponding first portion and the corresponding second portion of the at least one controllable light diffuser (106, 204, 306) to horizontally diffuse the first set of collimated light rays and the second set of collimated light rays, the at least one processor (108) is configured to:
vary an extent of horizontal diffusion of subsets of the first set of collimated light rays and subsets of the second set of collimated light rays, based on at least one of: (i) relative locations of respective sub-regions of the given first region of the backlight unit and relative locations of respective sub-regions of the given second region of the backlight unit with respect to an optical axis (Z) of the backlight unit, respectively, (ii) a viewing distance of the first eye (112a, 206a, 208a, 220a, 226a) and of the second eye (112b, 206b, 208b, 220b, 226b) of the individual one of the at least one user from the LCD device (102).

8. The display system (100, 202) of any of the preceding claims, wherein the at least one controllable light diffuser comprises a first controllable light diffuser (106) arranged between the backlight unit (104) and a multiscopic optical element (116).

9. The display system (100, 202) of any of claims 1-7, wherein the backlight unit (300) comprises a plurality of reflective elements (302a-d), wherein the at least one controllable light diffuser comprises a second controllable light diffuser (306) that is implemented as a layer on individual surfaces of the plurality of reflective elements.

10. The display system (100, 202) of claim 8 or 9, wherein the at least one controllable light diffuser further comprises a third controllable light diffuser (118) arranged on the optical path of the backlight unit (104, 216), after a multiscopic optical element (116).

11. A method comprising:
obtaining information indicative of a relative location of a first eye (112a, 206a, 208a, 220a, 226a) and of a second eye (112b, 206b, 208b, 220b, 226b) of an individual one of at least one user with respect to an image plane of a liquid crystal display (LCD) device (102), wherein the LCD device comprises a backlight unit (104, 216, 300) that is configured to produce collimated light rays (212, 218, 222a-b, 224, 228, 230, 232a-b);
generating or retrieving a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
displaying the light field image via the LCD device for presenting at least one virtual object;
repeating the step of obtaining, the step of generating or retrieving, and the step of displaying for a given time period;
during the given time period, detecting when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the collimated light rays emitted by the backlight unit are directed upon being diffused by at least one controllable light diffuser; and
when it is detected that at least one of: the first eye, the second eye of the individual one of the at least one user lies outside the current viewing zone of the display system,
determining a given first region of the backlight unit that is being employed to emit a first set of collimated light rays for presenting at least a part of the at least one virtual object to the first eye of the individual one of the at least one user, and a given second region of the backlight unit that is being employed to emit a second set of collimated light rays for presenting at least the part of the at least one virtual object to the second eye of the individual one of the at least one user; and
selectively activating a corresponding first portion and a corresponding second portion of the at least one controllable light diffuser (106, 204, 306) to horizontally diffuse the first set of collimated light rays and the second set of collimated light rays, whilst directing towards the first eye and the second eye of the individual one of the at least one user, respectively, the at least one controllable light diffuser being arranged on the optical path of the backlight unit.

12. The method of claim 11, further comprising controlling a corresponding first portion and a corresponding second portion of an active optical element (114), based on the relative location of the first eye (112a, 206a, 208a, 220a, 226a) and of the second eye (112b, 206b, 208b, 220b, 226b) of the individual one of the at least one user with respect to the image plane, to direct the first set of collimated light rays and the second set of collimated light rays towards the first eye and the second eye of the individual one of the at least one user, respectively, the active optical element being arranged on the optical path of the backlight unit (104, 216, 300).

13. The method of claim 11 or 12, wherein the at least one user is a plurality of users, and wherein the method further comprises:
during the given time period, detecting when a given set of collimated light rays emitted by a given region of the backlight unit (104, 216, 300) is being employed to present two-dimensional (2D) virtual content; and
when it is detected that the given set of collimated light rays emitted by the given region of the backlight unit is being employed to present the 2D virtual content,
selectively activating a corresponding given portion of the at least one controllable light diffuser (106, 204, 306) to horizontally diffuse the given set of collimated light rays, whilst directing towards eyes (112a-b, 206a-b, 208a-b, 220a-b, 226a-b) of each of the plurality of users.

14. The method of any of claims 11-13, further comprising:
during the given time period, detecting when the at least one user is a single user, and when eyes (220a-b) of the single user lie within a native viewing zone (202) of the display system, based on respective relative locations of the eyes of the single user with respect to the image plane, the native viewing zone being a zone within which the collimated light rays emitted by the backlight unit can be viewed directly, without being diffused by the at least one controllable light diffuser; and
when it is detected that the at least one user is the single user, and that the eyes of the single user lie within the native viewing zone of the display system,
selectively activating at least one horizontally-peripheral portion (210b-c) of the at least one controllable light diffuser to horizontally concentrate a set of collimated light rays (212, 218) emitted by at least one corresponding horizontally-peripheral region (214b-c) of the backlight unit (104, 216, 300), whilst directing towards the eyes of the single user.

15. The method of claim 14, further comprising:
when it is detected that the at least one user is the single user, and that the eyes (220a-b) of the single user lie within the native viewing zone (202) of the display system,
detecting when the eyes of the single user lie at a central portion of the native viewing zone of the display system; and
when it is detected that the eyes of the single user lie at the central portion of the native viewing zone of the display system,
selectively deactivating a central portion (210a) of the at least one controllable light diffuser (106, 204, 306) to allow a set of collimated light rays (224) emitted by a central region (214a) of the backlight unit (104, 216, 300) to pass therethrough towards the eyes of the single user.

16. The method of claim 14 or 15, further comprising:
when it is detected that the at least one user is the single user, and that the eyes (226a-b) of the single user lie within the native viewing zone (202) of the display system,
selectively activating at least one intermediate portion (210d-e) of the at least one controllable light diffuser (106, 204, 306) lying between the at least one horizontally-peripheral portion (210b-c) and a central portion (210a) of the at least one controllable light diffuser, to also horizontally concentrate another set of collimated light rays (232a-b) emitted by at least one corresponding intermediate region (214d-e) of the backlight unit (104, 216, 300), whilst directing towards the eyes of the single user,
wherein the step of selectively activating the at least one intermediate portion of the at least one controllable light diffuser comprises varying an extent of horizontal concentration of subsets of the another set of collimated light rays, based on at least one of: (i) relative locations of respective sub-regions of the at least one corresponding intermediate region of the backlight unit with respect to an optical axis (Z) of the backlight unit, (ii) a viewing distance of the eyes of the single user from the LCD device (102).

17. The method of any of claims 11-16, wherein the step of selectively activating the corresponding first portion and the corresponding second portion of the at least one controllable light diffuser (106, 204, 306) to horizontally diffuse the first set of collimated light rays and the second set of collimated light rays comprises:
varying an extent of horizontal diffusion of subsets of the first set of collimated light rays and subsets of the second set of collimated light rays, based on at least one of: (i) relative locations of respective sub-regions of the given first region of the backlight unit and relative locations of respective sub-regions of the given second region of the backlight unit with respect to an optical axis (Z) of the backlight unit, respectively, (ii) a viewing distance of the first eye (112a, 206a, 208a, 220a, 226a) and of the second eye (112b, 206b, 208b, 220b, 226b) of the individual one of the at least one user from the LCD device (102).

18. The method of any of claims 11-17, wherein the at least one controllable light diffuser comprises a first controllable light diffuser (106) arranged between the backlight unit (104) and a multiscopic optical element (116).

19. The method of any of claims 11-17, wherein the backlight unit (300) comprises a plurality of reflective elements (302a-d), wherein the at least one controllable light diffuser comprises a second controllable light diffuser (306) that is implemented as a layer on individual surfaces of the plurality of reflective elements.

20. The method of claim 18 or 19, wherein the at least one controllable light diffuser further comprises a third controllable light diffuser (118) arranged on the optical path of the backlight unit (104, 216), after a multiscopic optical element (116).

## Patentansprüche

1. Anzeigesystem (100, 202), umfassend:
eine Flüssigkristallanzeigevorrichtung (LCD-Vorrichtung) (102), die eine Hintergrundbeleuchtungseinheit (104, 216, 300) umfasst, die konfiguriert ist, um kollimierte Lichtstrahlen (212, 218, 222a-b, 224, 228, 230, 232a-b) zu erzeugen;
mindestens einen steuerbaren Lichtdiffusor (106, 204, 306), der auf dem optischen Pfad der Hintergrundbeleuchtungseinheit angeordnet ist; und
mindestens einen Prozessor (108), der konfiguriert ist zum:
Erhalten von Informationen, die eine relative Position eines ersten Auges (112a, 206a, 208a, 220a, 226a) und eines zweiten Auges (112b, 206b, 208b, 220b, 226b) eines Einzelnen von mindestens einem Benutzer in Bezug auf eine Bildebene der LCD-Vorrichtung angeben;
Erzeugen oder Abrufen eines Lichtfeldbildes auf der Grundlage der relativen Position des ersten Auges und des zweiten Auges des Einzelnen des mindestens einen Benutzers in Bezug auf die Bildebene, wobei das Lichtfeldbild eine Vielzahl von Pixeln umfasst, wobei ein erster Satz von Pixeln aus der Vielzahl von Pixeln eingesetzt wird, um einen ersten Teil eines synthetischen Lichtfeldes zu erzeugen, der dem ersten Auge entspricht, und wobei ein zweiter Satz von Pixeln aus der Vielzahl von Pixeln eingesetzt wird, um einen zweiten Teil des synthetischen Lichtfeldes zu erzeugen, der dem zweiten Auge entspricht;
Anzeigen des Lichtfeldbildes über die LCD-Vorrichtung zum Darstellen mindestens eines virtuellen Objekts;
Wiederholen des Schritts des Erhaltens, des Schritts des Erzeugens oder Abrufens und des Schritts des Anzeigens für eine gegebene Zeitspanne;
während der gegebenen Zeitspanne, Detektieren, wann mindestens eines von: dem ersten Auge, dem zweiten Auge des Einzelnen des mindestens einen Benutzers außerhalb einer aktuellen Betrachtungszone des Anzeigesystems liegt, auf der Grundlage der relativen Position des ersten Auges und des zweiten Auges des Einzelnen des mindestens einen Benutzers in Bezug auf die Bildebene, wobei die aktuelle Betrachtungszone eine Zone ist, auf die die von der Hintergrundbeleuchtungseinheit emittierten kollimierten Lichtstrahlen gelenkt werden, nachdem sie durch den mindestens einen steuerbaren Lichtdiffusor gestreut wurden; und
wenn detektiert wird, dass mindestens eines von: dem ersten Auge, dem zweiten Auge des Einzelnen des mindestens einen Benutzers außerhalb der aktuellen Betrachtungszone des Anzeigesystems liegt,
Bestimmen eines gegebenen ersten Bereichs der Hintergrundbeleuchtungseinheit, der eingesetzt wird, um einen ersten Satz von kollimierten Lichtstrahlen zu emittieren, um zumindest einen Teil des mindestens einen virtuellen Objekts dem ersten Auge des Einzelnen des mindestens einen Benutzers darzustellen, und eines gegebenen zweiten Bereichs der Hintergrundbeleuchtungseinheit, der eingesetzt wird, um einen zweiten Satz von kollimierten Lichtstrahlen zu emittieren, um zumindest den Teil des mindestens einen virtuellen Objekts dem zweiten Auge des Einzelnen des mindestens einen Benutzers darzustellen; und
selektives Aktivieren eines entsprechenden ersten Abschnitts und eines entsprechenden zweiten Abschnitts des mindestens einen steuerbaren Lichtdiffusors, um den ersten Satz von kollimierten Lichtstrahlen und den zweiten Satz von kollimierten Lichtstrahlen horizontal zu streuen, während sie auf das erste Auge bzw. das zweite Auge des Einzelnen des mindestens einen Benutzers gelenkt werden.

2. Anzeigesystem (100, 202) nach Anspruch 1, ferner umfassend ein aktives optisches Element (114), das auf dem optischen Pfad der Hintergrundbeleuchtungseinheit (104, 216, 300) angeordnet ist, wobei der mindestens eine Prozessor (108) konfiguriert ist, um einen entsprechenden ersten Abschnitt und einen entsprechenden zweiten Abschnitt des aktiven optischen Elements auf der Grundlage der relativen Position des ersten Auges (112a, 206a, 208a, 220a, 226a) und des zweiten Auges (112b, 206b, 208b, 220b, 226b) des Einzelnen des mindestens einen Benutzers in Bezug auf die Bildebene zu steuern, um den ersten Satz von kollimierten Lichtstrahlen und den zweiten Satz von kollimierten Lichtstrahlen auf das erste Auge bzw. und das zweite Auge des Einzelnen des mindestens einen Benutzers zu lenken.

3. Anzeigesystem (100, 202) nach einem der vorstehenden Ansprüche, wobei der mindestens eine Benutzer eine Vielzahl von Benutzern ist, wobei der mindestens eine Prozessor (108) konfiguriert ist zum:
während der gegebenen Zeitspanne, Detektieren, wann ein gegebener Satz von kollimierten Lichtstrahlen, der von einem gegebenen Bereich der Hintergrundbeleuchtungseinheit (104, 216, 300) emittiert wird, eingesetzt wird, um zweidimensionale (2D) virtuelle Inhalte darzustellen; und
wenn detektiert wird, dass der gegebene Satz von kollimierten Lichtstrahlen, der von dem gegebenen Bereich der Hintergrundbeleuchtungseinheit emittiert wird, eingesetzt wird, um den virtuellen 2D-Inhalt darzustellen,
selektives Aktivieren eines entsprechenden gegebenen Abschnitts des mindestens einen steuerbaren Lichtdiffusors (106, 204, 306), um den gegebenen Satz von kollimierten Lichtstrahlen horizontal zu streuen, während sie auf Augen (112a-b, 206a-b, 208a-b, 220a-b, 226a-b) jedes der Vielzahl von Benutzern gelenkt werden.

4. Anzeigesystem (100, 202) nach einem der vorstehenden Ansprüche, wobei der mindestens eine Prozessor (108) konfiguriert ist zum:
während der gegebenen Zeitspanne, Detektieren, wann der mindestens eine Benutzer ein einziger Benutzer ist, und wann Augen (220a-b) des einzigen Benutzers innerhalb einer nativen Betrachtungszone (202) des Anzeigesystems liegen, auf der Grundlage der jeweiligen relativen Positionen der Augen des einzigen Benutzers in Bezug auf die Bildebene, wobei die native Betrachtungszone eine Zone ist, innerhalb derer die von der Hintergrundbeleuchtungseinheit emittierten kollimierten Lichtstrahlen direkt betrachtet werden können, ohne durch den mindestens einen steuerbaren Lichtdiffusor gestreut zu werden; und
wenn detektiert wird, dass der mindestens eine Benutzer der einzige Benutzer ist und dass die Augen des einzigen Benutzers innerhalb der nativen Betrachtungszone des Anzeigesystems liegen,
selektives Aktivieren mindestens eines horizontal peripheren Abschnitts (210b-c) des mindestens einen steuerbaren Lichtdiffusors (106, 204, 306), um einen Satz von kollimierten Lichtstrahlen (212, 218), die von mindestens einem entsprechenden horizontal peripheren Bereich (214b-c) der Hintergrundbeleuchtungseinheit (104, 216, 300) emittiert werden, horizontal zu konzentrieren, während sie auf die Augen des einzigen Benutzers gelenkt werden.

5. Anzeigesystem (100, 202) nach Anspruch 4, wobei der mindestens eine Prozessor (108) konfiguriert ist zum:
wenn detektiert wird, dass der mindestens eine Benutzer der einzige Benutzer ist, und dass die Augen (220a-b) des einzigen Benutzers innerhalb der nativen Betrachtungszone (202) des Anzeigesystems liegen,
Detektieren, wann die Augen des einzigen Benutzers in einem zentralen Abschnitt der nativen Betrachtungszone des Anzeigesystems liegen; und
wenn detektiert wird, dass die Augen des einzigen Benutzers im zentralen Abschnitt der nativen Betrachtungszone des Anzeigesystems liegen,
selektives Deaktivieren eines zentralen Abschnitts (210a) des mindestens einen steuerbaren Lichtdiffusors (106, 204, 306), um zu ermöglichen, dass ein Satz von kollimierten Lichtstrahlen (224), die von einem zentralen Bereich (214a) der Hintergrundbeleuchtungseinheit (104, 216, 300) emittiert werden, durch diesen hindurch zu den Augen des einzigen Benutzers hin passieren.

6. Anzeigesystem (100, 202) nach Anspruch 4 oder 5, wobei der mindestens eine Prozessor (108) konfiguriert ist zum:
wenn detektiert wird, dass der mindestens eine Benutzer der einzige Benutzer ist, und dass die Augen (226a-b) des einzigen Benutzers innerhalb der nativen Betrachtungszone (202) des Anzeigesystems liegen,
selektives Aktivieren mindestens eines Zwischenabschnitts (210d-e) des mindestens einen steuerbaren Lichtdiffusors (106, 204, 306), der zwischen dem mindestens einen horizontal peripheren Abschnitt (210b-c) und einem zentralen Abschnitt (210a) des mindestens einen steuerbaren Lichtdiffusors liegt, um auch einen weiteren Satz von kollimierten Lichtstrahlen (232a-b), die von mindestens einem entsprechenden Zwischenbereich (214d-e) der Hintergrundbeleuchtungseinheit (104, 216, 300) emittiert werden, horizontal zu konzentrieren, während sie auf die Augen des einzelnen Benutzers gelenkt werden,
wobei beim selektiven Aktivieren des mindestens einen Zwischenabschnitts des mindestens einen steuerbaren Lichtdiffusors der mindestens eine Prozessor konfiguriert ist, um ein Ausmaß der horizontalen Konzentration von Teilmengen des weiteren Satzes von kollimierten Lichtstrahlen zu variieren, auf der Grundlage von mindestens einem von: (i) relativen Positionen jeweiliger Teilbereiche des mindestens einen entsprechenden Zwischenbereichs der Hintergrundbeleuchtungseinheit in Bezug auf eine optische Achse (Z) der Hintergrundbeleuchtungseinheit, (ii) einem Betrachtungsabstand der Augen des einzigen Benutzers von der LCD-Vorrichtung (102).

7. Anzeigesystem (100, 202) nach einem der vorstehenden Ansprüche, wobei beim selektiven Aktivieren des entsprechenden ersten Abschnitts und des entsprechenden zweiten Abschnitts des mindestens einen steuerbaren Lichtdiffusors (106, 204, 306), um den ersten Satz von kollimierten Lichtstrahlen und den zweiten Satz von kollimierten Lichtstrahlen horizontal zu streuen, der mindestens eine Prozessor (108) konfiguriert ist zum:
Variieren eines Ausmaßes der horizontalen Diffusion von Teilmengen des ersten Satzes von kollimierten Lichtstrahlen und Teilmengen des zweiten Satzes von kollimierten Lichtstrahlen, auf der Grundlage von mindestens einem von: (i) relativen Positionen jeweiliger Teilbereiche des gegebenen ersten Bereichs der Hintergrundbeleuchtungseinheit bzw. relativen Positionen jeweiliger Teilbereiche des gegebenen zweiten Bereichs der Hintergrundbeleuchtungseinheit in Bezug auf eine optische Achse (Z) der Hintergrundbeleuchtungseinheit, (ii) einem Betrachtungsabstand des ersten Auges (112a, 206a, 208a, 220a, 226a) und des zweiten Auges (112b, 206b, 208b, 220b, 226b) des Einzelnen des mindestens einen Benutzers von der LCD-Vorrichtung (102).

8. Anzeigesystem (100, 202) nach einem der vorstehenden Ansprüche, wobei der mindestens eine steuerbare Lichtdiffusor einen ersten steuerbaren Lichtdiffusor (106) umfasst, der zwischen der Hintergrundbeleuchtungseinheit (104) und einem multiskopischen optischen Element (116) angeordnet ist.

9. Anzeigesystem (100, 202) nach einem der Ansprüche 1 bis 7, wobei die Hintergrundbeleuchtungseinheit (300) eine Vielzahl von reflektierenden Elementen (302a-d) umfasst, wobei der mindestens eine steuerbare Lichtdiffusor einen zweiten steuerbaren Lichtdiffusor (306) umfasst, der als eine Schicht auf einzelnen Oberflächen der Vielzahl von reflektierenden Elementen implementiert ist.

10. Anzeigesystem (100, 202) nach Anspruch 8 oder 9, wobei der mindestens eine steuerbare Lichtdiffusor ferner einen dritten steuerbaren Lichtdiffusor (118) umfasst, der auf dem optischen Pfad der Hintergrundbeleuchtungseinheit (104, 216) nach einem multiskopischen optischen Element (116) angeordnet ist.

11. Verfahren, umfassend:
Erhalten von Informationen, die eine relative Position eines ersten Auges (112a, 206a, 208a, 220a, 226a) und eines zweiten Auges (112b, 206b, 208b, 220b, 226b) eines Einzelnen von mindestens einem Benutzer in Bezug auf eine Bildebene einer Flüssigkristallanzeigevorrichtung (LCD-Vorrichtung) (102) angeben, wobei die LCD-Vorrichtung eine Hintergrundbeleuchtungseinheit (104, 216, 300) umfasst, die konfiguriert ist, um kollimierte Lichtstrahlen (212, 218, 222a-b, 224, 228, 230, 232a-b) zu erzeugen;
Erzeugen oder Abrufen eines Lichtfeldbildes auf der Grundlage der relativen Position des ersten Auges und des zweiten Auges des Einzelnen des mindestens einen Benutzers in Bezug auf die Bildebene, wobei das Lichtfeldbild eine Vielzahl von Pixeln umfasst, wobei ein erster Satz von Pixeln aus der Vielzahl von Pixeln eingesetzt wird, um einen ersten Teil eines synthetischen Lichtfeldes zu erzeugen, der dem ersten Auge entspricht, und wobei ein zweiter Satz von Pixeln aus der Vielzahl von Pixeln eingesetzt wird, um einen zweiten Teil des synthetischen Lichtfeldes zu erzeugen, der dem zweiten Auge entspricht;
Anzeigen des Lichtfeldbildes über die LCD-Vorrichtung zum Darstellen mindestens eines virtuellen Objekts;
Wiederholen des Schritts des Erhaltens, des Schritts des Erzeugens oder Abrufens und des Schritts des Anzeigens für eine gegebene Zeitspanne;
während der gegebenen Zeitspanne, Detektieren, wann mindestens eines von: dem ersten Auge, dem zweiten Auge des Einzelnen des mindestens einen Benutzers außerhalb einer aktuellen Betrachtungszone des Anzeigesystems liegt, auf der Grundlage der relativen Position des ersten Auges und des zweiten Auges des Einzelnen des mindestens einen Benutzers in Bezug auf die Bildebene, wobei die aktuelle Betrachtungszone eine Zone ist, auf die die von der Hintergrundbeleuchtungseinheit emittierten kollimierten Lichtstrahlen gelenkt werden, nachdem sie durch den mindestens einen steuerbaren Lichtdiffusor gestreut wurden; und
wenn detektiert wird, dass mindestens eines von: dem ersten Auge, dem zweiten Auge des Einzelnen des mindestens einen Benutzers außerhalb der aktuellen Betrachtungszone des Anzeigesystems liegt,
Bestimmen eines gegebenen ersten Bereichs der Hintergrundbeleuchtungseinheit, der eingesetzt wird, um einen ersten Satz von kollimierten Lichtstrahlen zu emittieren, um zumindest einen Teil des mindestens einen virtuellen Objekts dem ersten Auge des Einzelnen des mindestens einen Benutzers darzustellen, und eines gegebenen zweiten Bereichs der Hintergrundbeleuchtungseinheit, der eingesetzt wird, um einen zweiten Satz von kollimierten Lichtstrahlen zu emittieren, um zumindest den Teil des mindestens einen virtuellen Objekts dem zweiten Auge des Einzelnen des mindestens einen Benutzers darzustellen; und
selektives Aktivieren eines entsprechenden ersten Abschnitts und eines entsprechenden zweiten Abschnitts des mindestens einen steuerbaren Lichtdiffusors (106, 204, 306), um den ersten Satz von kollimierten Lichtstrahlen und den zweiten Satz von kollimierten Lichtstrahlen horizontal zu streuen, während sie auf das erste Auge bzw. das zweite Auge des Einzelnen des mindestens einen Benutzers gelenkt werden, wobei der mindestens eine steuerbare Lichtdiffusor auf dem optischen Pfad der Hintergrundbeleuchtungseinheit angeordnet ist.

12. Verfahren nach Anspruch 11, ferner umfassend das Steuern eines entsprechenden ersten Abschnitts und eines entsprechenden zweiten Abschnitts eines aktiven optischen Elements (114) auf der Grundlage der relativen Position des ersten Auges (112a, 206a, 208a, 220a, 226a) und des zweiten Auges (112b, 206b, 208b, 220b, 226b) des Einzelnen des mindestens einen Benutzers in Bezug auf die Bildebene, um den ersten Satz von kollimierten Lichtstrahlen und den zweiten Satz von kollimierten Lichtstrahlen auf das erste Auge bzw. das zweite Auge des Einzelnen des mindestens einen Benutzers zu lenken, wobei das aktive optische Element auf dem optischen Pfad der Hintergrundbeleuchtungseinheit (104, 216, 300) angeordnet ist.

13. Verfahren nach Anspruch 11 oder 12, wobei der mindestens eine Benutzer eine Vielzahl von Benutzern ist, und wobei das Verfahren ferner umfasst:
während der gegebenen Zeitspanne, Detektieren, wann ein gegebener Satz von kollimierten Lichtstrahlen, der von einem gegebenen Bereich der Hintergrundbeleuchtungseinheit (104, 216, 300) emittiert wird, eingesetzt wird, um zweidimensionale (2D) virtuelle Inhalte darzustellen; und
wenn detektiert wird, dass der gegebene Satz von kollimierten Lichtstrahlen, der von dem gegebenen Bereich der Hintergrundbeleuchtungseinheit emittiert wird, eingesetzt wird, um den virtuellen 2D-Inhalt darzustellen,
selektives Aktivieren eines entsprechenden gegebenen Abschnitts des mindestens einen steuerbaren Lichtdiffusors (106, 204, 306), um den gegebenen Satz von kollimierten Lichtstrahlen horizontal zu streuen, während sie auf Augen (112a-b, 206a-b, 208a-b, 220a-b, 226a-b) jedes der Vielzahl von Benutzern gelenkt werden.

14. Verfahren nach einem der Ansprüche 11 bis 13, ferner umfassend:
während der gegebenen Zeitspanne, Detektieren, wann der mindestens eine Benutzer ein einziger Benutzer ist, und wann Augen (220a-b) des einzigen Benutzers innerhalb einer nativen Betrachtungszone (202) des Anzeigesystems liegen, auf der Grundlage der jeweiligen relativen Positionen der Augen des einzigen Benutzers in Bezug auf die Bildebene, wobei die native Betrachtungszone eine Zone ist, innerhalb derer die von der Hintergrundbeleuchtungseinheit emittierten kollimierten Lichtstrahlen direkt betrachtet werden können, ohne durch den mindestens einen steuerbaren Lichtdiffusor gestreut zu werden; und
wenn detektiert wird, dass der mindestens eine Benutzer der einzige Benutzer ist und dass die Augen des einzigen Benutzers innerhalb der nativen Betrachtungszone des Anzeigesystems liegen,
selektives Aktivieren mindestens eines horizontal peripheren Abschnitts (210b-c) des mindestens einen steuerbaren Lichtdiffusors, um einen Satz von kollimierten Lichtstrahlen (212, 218), die von mindestens einem entsprechenden horizontal peripheren Bereich (214b-c) der Hintergrundbeleuchtungseinheit (104, 216, 300) emittiert werden, horizontal zu konzentrieren, während sie auf die Augen des einzigen Benutzers gelenkt werden.

15. Verfahren nach Anspruch 14, ferner umfassend:
wenn detektiert wird, dass der mindestens eine Benutzer der einzige Benutzer ist, und dass die Augen (220a-b) des einzigen Benutzers innerhalb der nativen Betrachtungszone (202) des Anzeigesystems liegen,
Detektieren, wann die Augen des einzigen Benutzers in einem zentralen Abschnitt der nativen Betrachtungszone des Anzeigesystems liegen; und
wenn detektiert wird, dass die Augen des einzigen Benutzers im zentralen Abschnitt der nativen Betrachtungszone des Anzeigesystems liegen,
selektives Deaktivieren eines zentralen Abschnitts (210a) des mindestens einen steuerbaren Lichtdiffusors (106, 204, 306), um zu ermöglichen, dass ein Satz von kollimierten Lichtstrahlen (224), die von einem zentralen Bereich (214a) der Hintergrundbeleuchtungseinheit (104, 216, 300) emittiert werden, durch diesen hindurch zu den Augen des einzigen Benutzers hin passieren.

16. Verfahren nach Anspruch 14 oder 15, ferner umfassend:
wenn detektiert wird, dass der mindestens eine Benutzer der einzige Benutzer ist, und dass die Augen (226a-b) des einzigen Benutzers innerhalb der nativen Betrachtungszone (202) des Anzeigesystems liegen,
selektives Aktivieren mindestens eines Zwischenabschnitts (210d-e) des mindestens einen steuerbaren Lichtdiffusors (106, 204, 306), der zwischen dem mindestens einen horizontal peripheren Abschnitt (210b-c) und einem zentralen Abschnitt (210a) des mindestens einen steuerbaren Lichtdiffusors liegt, um auch einen weiteren Satz von kollimierten Lichtstrahlen (232a-b), die von mindestens einem entsprechenden Zwischenbereich (214d-e) der Hintergrundbeleuchtungseinheit (104, 216, 300) emittiert werden, horizontal zu konzentrieren, während sie auf die Augen des einzelnen Benutzers gelenkt werden,
wobei der Schritt des selektiven Aktivierens des mindestens einen Zwischenabschnitts des mindestens einen steuerbaren Lichtdiffusors das Variieren eines Ausmaßes der horizontalen Konzentration von Teilmengen des weiteren Satzes von kollimierten Lichtstrahlen umfasst, auf der Grundlage von mindestens einem von: (i) relativen Positionen jeweiliger Teilbereiche des mindestens einen entsprechenden Zwischenbereichs der Hintergrundbeleuchtungseinheit in Bezug auf eine optische Achse (Z) der Hintergrundbeleuchtungseinheit, (ii) einem Betrachtungsabstand der Augen des einzigen Benutzers von der LCD-Vorrichtung (102).

17. Verfahren nach einem der Ansprüche 11 bis 16, wobei der Schritt des selektiven Aktivierens des entsprechenden ersten Abschnitts und des entsprechenden zweiten Abschnitts des mindestens einen steuerbaren Lichtdiffusors (106, 204, 306), um den ersten Satz von kollimierten Lichtstrahlen und den zweiten Satz von kollimierten Lichtstrahlen horizontal zu streuen, umfasst:
Variieren eines Ausmaßes der horizontalen Diffusion von Teilmengen des ersten Satzes von kollimierten Lichtstrahlen und Teilmengen des zweiten Satzes von kollimierten Lichtstrahlen, auf der Grundlage von mindestens einem von: (i) relativen Positionen jeweiliger Teilbereiche des gegebenen ersten Bereichs der Hintergrundbeleuchtungseinheit bzw. relativen Positionen jeweiliger Teilbereiche des gegebenen zweiten Bereichs der Hintergrundbeleuchtungseinheit in Bezug auf eine optische Achse (Z) der Hintergrundbeleuchtungseinheit, (ii) einem Betrachtungsabstand des ersten Auges (112a, 206a, 208a, 220a, 226a) und des zweiten Auges (112b, 206b, 208b, 220b, 226b) des Einzelnen des mindestens einen Benutzers von der LCD-Vorrichtung (102).

18. Verfahren nach einem der Ansprüche 11 bis 17, wobei der mindestens eine steuerbare Lichtdiffusor einen ersten steuerbaren Lichtdiffusor (106) umfasst, der zwischen der Hintergrundbeleuchtungseinheit (104) und einem multiskopischen optischen Element (116) angeordnet ist.

19. Verfahren nach einem der Ansprüche 11 bis 17, wobei die Hintergrundbeleuchtungseinheit (300) eine Vielzahl von reflektierenden Elementen (302a-d) umfasst, wobei der mindestens eine steuerbare Lichtdiffusor einen zweiten steuerbaren Lichtdiffusor (306) umfasst, der als eine Schicht auf einzelnen Oberflächen der Vielzahl von reflektierenden Elementen implementiert ist.

20. Verfahren nach Anspruch 18 oder 19, wobei der mindestens eine steuerbare Lichtdiffusor ferner einen dritten steuerbaren Lichtdiffusor (118) umfasst, der auf dem optischen Pfad der Hintergrundbeleuchtungseinheit (104, 216) nach einem multiskopischen optischen Element (116) angeordnet ist.

## Revendications

1. Système d'affichage (100, 202) comprenant :
un dispositif (102) d'affichage à cristaux liquides (LCD) comprenant une unité de rétroéclairage (104, 216, 300) qui est configurée pour produire des rayons lumineux (212, 218, 222a-b, 224, 228, 230, 232a-b) collimatés ;
au moins un diffuseur de lumière (106, 204, 306) pouvant être commandé agencé sur le trajet optique de l'unité de rétroéclairage ; et
au moins un processeur (108) configuré pour :
obtenir des informations indiquant une localisation relative d'un premier œil (112a, 206a, 208a, 220a, 226a) et d'un second œil (112b, 206b, 208b, 220b, 226b) d'un utilisateur individuel d'au moins un utilisateur par rapport à un plan d'image du dispositif LCD ;
générer ou récupérer une image de champ lumineux, en fonction de la localisation relative du premier œil et du second œil de l'au moins un utilisateur individuel par rapport au plan d'image, dans lequel l'image de champ lumineux comprend une pluralité de pixels, un premier ensemble de pixels dans la pluralité de pixels étant utilisé pour générer une première partie d'un champ lumineux synthétique qui correspond au premier œil, et un second ensemble de pixels dans la pluralité de pixels étant utilisé pour générer une seconde partie du champ lumineux synthétique qui correspond au second œil ;
afficher l'image de champ lumineux par le biais du dispositif LCD pour présenter au moins un objet virtuel ;
répéter l'étape d'obtention, l'étape de génération ou de récupération, et l'étape d'affichage pendant un laps de temps donné ;
pendant le laps de temps donné, détecter à quel moment au moins l'un parmi : le premier œil, le second œil de l'au moins un utilisateur individuel se trouve en dehors d'une zone de visualisation actuelle du système d'affichage, en fonction de la localisation relative du premier œil et du second œil de l'utilisateur individuel de l'au moins un utilisateur par rapport au plan d'image, la zone de visualisation actuelle étant une zone vers laquelle les rayons lumineux collimatés émis par l'unité de rétroéclairage sont dirigés lorsqu'ils sont diffusés par l'au moins un diffuseur de lumière pouvant être commandé ; et
lorsqu'il est détecté qu'au moins l'un parmi : le premier œil, le second œil de l'utilisateur individuel de l'au moins un utilisateur se trouve en dehors de la zone de visualisation actuelle du système d'affichage,
déterminer une première région donnée de l'unité de rétroéclairage, laquelle première région est utilisée pour émettre un premier ensemble de rayons lumineux collimatés, pour présenter au moins une partie de l'au moins un objet virtuel au premier œil de l'utilisateur individuel de l'au moins un utilisateur, et une seconde région donnée de l'unité de rétroéclairage, laquelle seconde région est utilisée pour émettre un second ensemble de rayons lumineux collimatés, pour présenter au moins la partie de l'au moins un objet virtuel au second œil de l'utilisateur individuel de l'au moins un utilisateur ; et
activer sélectivement une première section correspondante et une seconde section correspondante de l'au moins un diffuseur de lumière pouvant être commandé pour diffuser horizontalement le premier ensemble de rayons lumineux collimatés et le second ensemble de rayons lumineux collimatés, tout en les dirigeant vers le premier œil et le second œil de l'utilisateur individuel de l'au moins un utilisateur, respectivement.

2. Système d'affichage (100, 202) selon la revendication 1, comprenant en outre un élément optique (114) actif agencé sur le trajet optique de l'unité de rétroéclairage (104, 216, 300), dans lequel l'au moins un processeur (108) est configuré pour commander une première section correspondante et une seconde section correspondante de l'élément optique actif, en fonction de la localisation relative du premier œil (112a, 206a, 208a, 220a, 226a) et du second œil (112b, 206b, 208b, 220b, 226b) de l'utilisateur individuel de l'au moins un utilisateur par rapport au plan d'image, pour diriger le premier ensemble de rayons lumineux collimatés et le second ensemble de rayons lumineux collimatés vers le premier œil et le second œil de l'utilisateur individuel de l'au moins un utilisateur, respectivement.

3. Système d'affichage (100, 202) selon l'une quelconque des revendications précédentes, dans lequel l'au moins un utilisateur est une pluralité d'utilisateurs, dans lequel l'au moins un processeur (108) est configuré pour :
détecter, pendant le laps de temps donné, à quel moment un ensemble donné de rayons lumineux collimatés émis par une région donnée de l'unité de rétroéclairage (104, 216, 300) est utilisé pour présenter un contenu virtuel bidimensionnel (2D) ; et
lorsqu'il est détecté que l'ensemble donné de rayons lumineux collimatés émis par la région donnée de l'unité de rétroéclairage est utilisé pour présenter le contenu virtuel 2D,
activer sélectivement une section donnée correspondante de l'au moins un diffuseur de lumière (106, 204, 306) pouvant être commandé pour diffuser horizontalement l'ensemble donné de rayons lumineux collimatés, tout en le dirigeant vers les yeux (112a-b, 206a-b, 208a-b, 220a-b, 226a-b) de chacun de la pluralité d'utilisateurs.

4. Système d'affichage (100, 202) selon l'une quelconque des revendications précédentes, dans lequel l'au moins un processeur (108) est configuré pour :
détecter, pendant le laps de temps donné, à quel moment l'au moins un utilisateur est un utilisateur unique, et à quel moment les yeux (220a-b) de l'utilisateur unique se trouvent dans une zone de visualisation native (202) du système d'affichage, en fonction de localisations relatives respectives des yeux de l'utilisateur unique par rapport au plan d'image, la zone de visualisation native étant une zone à l'intérieur de laquelle les rayons lumineux collimatés émis par l'unité de rétroéclairage peuvent être visualisés directement sans être diffusés par l'au moins un diffuseur de lumière pouvant être commandé ; et
lorsqu'il est détecté que l'au moins un utilisateur est l'utilisateur unique et que les yeux de l'utilisateur unique se trouvent dans la zone de visualisation native du système d'affichage,
activer sélectivement au moins une section (210b-c) périphérique horizontale de l'au moins un diffuseur de lumière (106, 204, 306) pouvant être commandé pour concentrer horizontalement un ensemble de rayons lumineux (212, 218) collimatés émis par au moins une région (214b-c) périphérique horizontale correspondante de l'unité de rétroéclairage (104, 216, 300), tout en le dirigeant vers les yeux de l'utilisateur unique.

5. Système d'affichage (100, 202) selon la revendication 4, dans lequel l'au moins un processeur (108) est configuré pour :
lorsqu'il est détecté que l'au moins un utilisateur est l'utilisateur unique et que les yeux (220a-b) de l'utilisateur unique se trouvent dans la zone de visualisation native (202) du système d'affichage,
détecter le moment où les yeux de l'utilisateur unique se trouvent dans une section centrale de la zone de visualisation native du système d'affichage ; et
lorsqu'il est détecté que les yeux de l'utilisateur unique se trouvent au niveau de la section centrale de la zone de visualisation native du système d'affichage,
désactiver sélectivement une section centrale (210a) de l'au moins un diffuseur de lumière (106, 204, 306) pouvant être commandé pour permettre à un ensemble de rayons lumineux (224) collimatés émis par une région centrale (214a) de l'unité de rétroéclairage (104, 216, 300) de passer à travers celle-ci vers les yeux de l'utilisateur unique.

6. Système d'affichage (100, 202) selon la revendication 4 ou 5, dans lequel l'au moins un processeur (108) est configuré pour :
lorsqu'il est détecté que l'au moins un utilisateur est l'utilisateur unique et que les yeux (226a-b) de l'utilisateur unique se trouvent dans la zone de visualisation native (202) du système d'affichage,
activer sélectivement au moins une section intermédiaire (210de) de l'au moins un diffuseur de lumière (106, 204, 306) pouvant être commandé, laquelle section intermédiaire est située entre l'au moins une section (210b-c) périphérique horizontale et une section centrale (210a) de l'au moins un diffuseur de lumière pouvant être commandé, pour concentrer également horizontalement un autre ensemble de rayons lumineux (232a-b) collimatés émis par au moins une région intermédiaire (214d-e) correspondante de l'unité de rétroéclairage (104, 216, 300), tout en le dirigeant vers les yeux de l'utilisateur unique,
dans lequel, lors de l'activation sélective de l'au moins une section intermédiaire de l'au moins un diffuseur de lumière pouvant être commandé, l'au moins un processeur est configuré pour faire varier une étendue de concentration horizontale de sous-ensembles de l'autre ensemble de rayons lumineux collimatés, en fonction d'au moins l'une parmi : (i) des localisations relatives de sous-régions respectives de l'au moins une région intermédiaire correspondante de l'unité de rétroéclairage par rapport à un axe optique (Z) de l'unité de rétroéclairage, (ii) une distance de visualisation des yeux de l'utilisateur unique à partir du dispositif LCD (102).

7. Système d'affichage (100, 202) selon l'une quelconque des revendications précédentes, dans lequel, lors de l'activation sélective de la première section correspondante et de la seconde section correspondante de l'au moins un diffuseur de lumière (106, 204, 306) pouvant être commandé pour diffuser horizontalement le premier ensemble de rayons lumineux collimatés et le second ensemble de rayons lumineux collimatés, l'au moins un processeur (108) est configuré pour :
faire varier une étendue de diffusion horizontale de sous-ensembles du premier ensemble de rayons lumineux collimatés et de sous-ensembles du second ensemble de rayons lumineux collimatés, en fonction d'au moins l'une parmi : (i) des localisations relatives de sous-régions respectives de la première région donnée de l'unité de rétroéclairage et des localisations relatives de sous-régions respectives de la seconde région donnée de l'unité de rétroéclairage par rapport à un axe optique (Z) de l'unité de rétroéclairage, respectivement, (ii) une distance de visualisation du premier œil (112a, 206a, 208a, 220a, 226a) et du second œil (112b, 206b, 208b, 220b, 226b) de l'utilisateur individuel de l'au moins un utilisateur à partir du dispositif LCD (102).

8. Système d'affichage (100, 202) selon l'une quelconque des revendications précédentes, dans lequel l'au moins un diffuseur de lumière pouvant être commandé comprend un premier diffuseur de lumière (106) pouvant être commandé agencé entre l'unité de rétroéclairage (104) et un élément optique multiscopique (116).

9. Système d'affichage (100, 202) selon l'une quelconque des revendications 1 à 7, dans lequel l'unité de rétroéclairage (300) comprend une pluralité d'éléments réfléchissants (302a-d), dans lequel l'au moins un diffuseur de lumière pouvant être commandé comprend un deuxième diffuseur de lumière (306) pouvant être commandé qui est mis en œuvre sous la forme d'une couche sur des surfaces individuelles de la pluralité d'éléments réfléchissants.

10. Système d'affichage (100, 202) selon la revendication 8 ou 9, dans lequel l'au moins un diffuseur de lumière pouvant être commandé comprend en outre un troisième diffuseur de lumière (118) pouvant être commandé agencé sur le trajet optique de l'unité de rétroéclairage (104, 216), après un élément optique multiscopique (116).

11. Procédé comprenant :
l'obtention d'informations indiquant une localisation relative d'un premier œil (112a, 206a, 208a, 220a, 226a) et d'un second œil (112b, 206b, 208b, 220b, 226b) d'un utilisateur individuel d'au moins un utilisateur par rapport à un plan d'image d'un dispositif (102) d'affichage à cristaux liquides (LCD), dans lequel le dispositif LCD comprend une unité de rétroéclairage (104, 216, 300) qui est configurée pour produire des rayons lumineux (212, 218, 222a-b, 224, 228, 230, 232a-b) collimatés ;
la génération ou la récupération d'une image de champ lumineux, en fonction de la localisation relative du premier œil et du second œil de l'utilisateur individuel de l'au moins un utilisateur par rapport au plan d'image, dans lequel l'image de champ lumineux comprend une pluralité de pixels, un premier ensemble de pixels dans la pluralité de pixels étant utilisé pour générer une première partie d'un champ lumineux synthétique qui correspond au premier œil, et un second ensemble de pixels dans la pluralité de pixels étant utilisé pour générer une seconde partie du champ lumineux synthétique qui correspond au second œil ;
l'affichage de l'image de champ lumineux par le biais du dispositif LCD pour présenter au moins un objet virtuel ;
la répétition de l'étape d'obtention, de l'étape de génération ou de récupération, et de l'étape d'affichage pendant un laps de temps donné ;
pendant le laps de temps donné, la détection du moment où au moins l'un parmi : le premier œil, le second œil de l'au moins un utilisateur individuel se trouve en dehors d'une zone de visualisation actuelle du système d'affichage, en fonction de la localisation relative du premier œil et du second œil de l'utilisateur individuel de l'au moins un utilisateur par rapport au plan d'image, la zone de visualisation actuelle étant une zone vers laquelle les rayons lumineux collimatés émis par l'unité de rétroéclairage sont dirigés lorsqu'ils sont diffusés par au moins un diffuseur de lumière pouvant être commandé ; et
lorsqu'il est détecté qu'au moins l'un parmi : le premier œil, le second œil de l'utilisateur individuel de l'au moins un utilisateur se trouve en dehors de la zone de visualisation actuelle du système d'affichage,
la détermination d'une première région donnée de l'unité de rétroéclairage, laquelle première région est utilisée pour émettre un premier ensemble de rayons lumineux collimatés pour présenter au moins une partie de l'au moins un objet virtuel au premier œil de l'utilisateur individuel de l'au moins un utilisateur, et une seconde région donnée de l'unité de rétroéclairage, laquelle seconde région est utilisée pour émettre un second ensemble de rayons lumineux collimatés pour présenter au moins la partie de l'au moins un objet virtuel au second œil de l'utilisateur individuel de l'au moins un utilisateur ; et
l'activation sélective d'une première section correspondante et d'une seconde section correspondante de l'au moins un diffuseur de lumière (106, 204, 306) pouvant être commandé pour diffuser horizontalement le premier ensemble de rayons lumineux collimatés et le second ensemble de rayons lumineux collimatés, tout en les dirigeant vers le premier œil et le second œil de l'utilisateur individuel de l'au moins un utilisateur, respectivement, l'au moins un diffuseur de lumière pouvant être commandé étant agencé sur le trajet optique de l'unité de rétroéclairage.

12. Procédé selon la revendication 11, comprenant en outre la commande d'une première section correspondante et d'une seconde section correspondante d'un élément optique actif (114), en fonction de la localisation relative du premier œil (112a, 206a, 208a, 220a, 226a) et du second œil (112b, 206b, 208b, 220b, 226b) de l'utilisateur individuel de l'au moins un utilisateur par rapport au plan d'image, pour diriger le premier ensemble de rayons lumineux collimatés et le second ensemble de rayons lumineux collimatés vers le premier œil et le second œil de l'utilisateur individuel de l'au moins un utilisateur, respectivement, l'élément optique actif étant agencé sur le trajet optique de l'unité de rétroéclairage (104, 216, 300).

13. Procédé selon la revendication 11 ou 12, dans lequel l'au moins un utilisateur est une pluralité d'utilisateurs, et dans lequel le procédé comprend en outre :
la détection, pendant le laps de temps donné, du moment où un ensemble donné de rayons lumineux collimatés émis par une région donnée de l'unité de rétroéclairage (104, 216, 300) est utilisé pour présenter un contenu virtuel bidimensionnel (2D) ; et
lorsqu'il est détecté que l'ensemble donné de rayons lumineux collimatés émis par la région donnée de l'unité de rétroéclairage est utilisé pour présenter le contenu virtuel 2D,
l'activation sélective d'une section donnée correspondante de l'au moins un diffuseur de lumière (106, 204, 306) pouvant être commandé pour diffuser horizontalement l'ensemble donné de rayons lumineux collimatés, tout en le dirigeant vers les yeux (112a-b, 206a-b, 208a-b, 220a-b, 226a-b) de chacun de la pluralité d'utilisateurs.

14. Procédé selon l'une quelconque des revendications 11 à 13, comprenant en outre :
la détection, pendant le laps de temps donné, du moment où l'au moins un utilisateur est un utilisateur unique, et du moment où des yeux (220a-b) de l'utilisateur unique se trouvent dans une zone de visualisation native (202) du système d'affichage, en fonction de localisations relatives respectives des yeux de l'utilisateur unique par rapport au plan d'image, la zone de visualisation native étant une zone à l'intérieur de laquelle les rayons lumineux collimatés émis par l'unité de rétroéclairage peuvent être visualisés directement sans être diffusés par l'au moins un diffuseur de lumière pouvant être commandé ; et
lorsqu'il est détecté que l'au moins un utilisateur est l'utilisateur unique et que les yeux de l'utilisateur unique se trouvent dans la zone de visualisation native du système d'affichage,
l'activation sélective d'au moins une section (210b-c) périphérique horizontale de l'au moins un diffuseur de lumière pouvant être commandé pour concentrer horizontalement un ensemble de rayons lumineux (212, 218) collimatés émis par au moins une région (214b-c) périphérique horizontale correspondante de l'unité de rétroéclairage (104, 216, 300), tout en le dirigeant vers les yeux de l'utilisateur unique.

15. Procédé selon la revendication 14, comprenant en outre :
lorsqu'il est détecté que l'au moins un utilisateur est l'utilisateur unique et que les yeux (220a-b) de l'utilisateur unique se trouvent dans la zone de visualisation native (202) du système d'affichage,
la détection du moment où les yeux de l'utilisateur unique se trouvent dans une section centrale de la zone de visualisation native du système d'affichage ; et
lorsqu'il est détecté que les yeux de l'utilisateur unique se trouvent au niveau de la section centrale de la zone de visualisation native du système d'affichage,
la désactivation sélective d'une section centrale (210a) de l'au moins un diffuseur de lumière (106, 204, 306) pouvant être commandé pour permettre à un ensemble de rayons lumineux (224) collimatés émis par une région centrale (214a) de l'unité de rétroéclairage (104, 216, 300) de passer à travers celle-ci vers les yeux de l'utilisateur unique.

16. Procédé selon la revendication 14 ou 15, comprenant en outre :
lorsqu'il est détecté que l'au moins un utilisateur est l'utilisateur unique et que les yeux (226a-b) de l'utilisateur unique se trouvent dans la zone de visualisation native (202) du système d'affichage,
l'activation sélective d'au moins une section intermédiaire (210de) de l'au moins un diffuseur de lumière (106, 204, 306) pouvant être commandé, laquelle section intermédiaire est située entre l'au moins une section (210b-c) périphérique horizontale et une section centrale (210a) de l'au moins un diffuseur de lumière pouvant être commandé, pour concentrer également horizontalement un autre ensemble de rayons lumineux (232a-b) collimatés émis par au moins une région intermédiaire (214d-e) correspondante de l'unité de rétroéclairage (104, 216, 300), tout en le dirigeant vers les yeux de l'utilisateur unique,
dans lequel l'étape d'activation sélective de l'au moins une section intermédiaire de l'au moins un diffuseur de lumière pouvant être commandé comprend la variation d'une étendue de concentration horizontale de sous-ensembles de l'autre ensemble de rayons lumineux collimatés, en fonction d'au moins l'une parmi : (i) des localisations relatives de sous-régions respectives de l'au moins une région intermédiaire correspondante de l'unité de rétroéclairage par rapport à un axe optique (Z) de l'unité de rétroéclairage, (ii) une distance de visualisation des yeux de l'utilisateur unique à partir du dispositif LCD (102).

17. Procédé selon l'une quelconque des revendications 11 à 16, dans lequel l'étape d'activation sélective de la première section correspondante et de la seconde section correspondante de l'au moins un diffuseur de lumière (106, 204, 306) pouvant être commandé pour diffuser horizontalement le premier ensemble de rayons lumineux collimatés et le second ensemble de rayons lumineux collimatés comprend :
la variation d'une étendue de diffusion horizontale de sous-ensembles du premier ensemble de rayons lumineux collimatés et de sous-ensembles du second ensemble de rayons lumineux collimatés, en fonction d'au moins l'une parmi : (i) des localisations relatives de sous-régions respectives de la première région donnée de l'unité de rétroéclairage et des localisations relatives de sous-régions respectives de la seconde région donnée de l'unité de rétroéclairage par rapport à un axe optique (Z) de l'unité de rétroéclairage, respectivement, (ii) une distance de visualisation du premier œil (112a, 206a, 208a, 220a, 226a) et du second œil (112b, 206b, 208b, 220b, 226b) de l'utilisateur individuel de l'au moins un utilisateur à partir du dispositif LCD (102).

18. Procédé selon l'une quelconque des revendications 11 à 17, dans lequel l'au moins un diffuseur de lumière pouvant être commandé comprend un premier diffuseur de lumière (106) pouvant être commandé agencé entre l'unité de rétroéclairage (104) et un élément optique multiscopique (116).

19. Procédé selon l'une quelconque des revendications 11 à 17, dans lequel l'unité de rétroéclairage (300) comprend une pluralité d'éléments réfléchissants (302a-d), dans lequel l'au moins un diffuseur de lumière pouvant être commandé comprend un deuxième diffuseur de lumière (306) pouvant être commandé qui est mis en œuvre sous forme d'une couche sur des surfaces individuelles de la pluralité d'éléments réfléchissants.

20. Procédé selon la revendication 18 ou 19, dans lequel l'au moins un diffuseur de lumière pouvant être commandé comprend en outre un troisième diffuseur de lumière (118) pouvant être commandé agencé sur le trajet optique de l'unité de rétroéclairage (104, 216), après un élément optique multiscopique (116).
